(19) Europäisches Patentamt / European Patent Office / Office européen des brevets

(11) **EP 3 564 621 A1**

(12) **EUROPEAN PATENT APPLICATION**
published in accordance with Art. 153(4) EPC

(43) Date of publication:
06.11.2019 Bulletin 2019/45

(51) Int Cl.:
*G01C 21/20* (2006.01)

(21) Application number: 16925798.7

(86) International application number:
PCT/JP2016/089204

(22) Date of filing: 28.12.2016

(87) International publication number:
WO 2018/123062 (05.07.2018 Gazette 2018/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: SZ DJI Technology Co., Ltd.
Tokyo 135-0091 (CN)

(72) Inventor: GU, Lei
Tokyo 135-0091 (JP)

(74) Representative: Goddar, Heinz J.
Boehmert & Boehmert
Anwaltspartnerschaft mbB
Pettenkoferstrasse 22
80336 München (DE)

(54) **FLIGHT PATH DISPLAY METHOD, MOBILE PLATFORM, FLIGHT SYSTEM, RECORDING MEDIUM, AND PROGRAM**

(57) To generate an optimal flight direction of an unmanned aerial vehicle and to suppress a reduction in convenience at the time of operation by a user. A flight route display method comprises the steps of: acquiring a flight range of an unmanned aerial vehicle and environment information about the unmanned aerial vehicle; calculating, based on a flight direction index for a flight route of the unmanned aerial vehicle within the flight range, an optimal flight route within the flight range; and displaying the optimal flight route within the flight range of the unmanned aerial vehicle.

Fig. 6

## Description

## Technical Field

The present disclosure relates to a flight route display method, a mobile platform, a flight system, a recording medium and a program for generating and displaying a flight route of an unmanned aerial vehicle.

## Background Art

A platform (e.g., an unmanned aerial vehicle) which carries a imaging device and takes photographs while flying along a preset fixed route is known (see, for example, Patent Document 1). The platform receives commands, such as a flight route and a photography instruction, from a ground base, flies according to the commands, takes a photograph and sends a captured image to the ground base. In addition, when photographing an object to be photographed, the platform inclines, based on the positional relationship between the platform and the object to be photographed, the imaging device thereof and takes a photograph while flying along the set fixed route.

Measuring a two-dimensional ortho-image or a three-dimensional shape, such as the ground and a building, based on a photographed image such as an aerial photograph photographed by the above unmanned aerial vehicle (e.g., a UAV) is known in the related art. In order to automate photography (e.g., aerial photography) by the unmanned aerial vehicle, which flies in the air, it is necessary to generate a flight route of the unmanned aerial vehicle in advance before the unmanned aerial vehicle starts flying. A technique for automatically generating a flight route of an unmanned aerial vehicle is already known, and in this technique, the flight route of the unmanned aerial vehicle is automatically generated so as to acquire the shortest route, for example.

## Prior Art Document

## Patent Document

Patent Document 1: JP-A-2010-61216

## Summary of the Invention

## Problems to be Solved by the Invention

In the above technique, when the flight path of the unmanned aerial vehicle is automatically generated so as to acquire the shortest route, for example, the flight direction of unmanned aerial vehicle is, for example, a predetermined direction, or is a route respectively specified by a user. For example, when a predetermined direction is used as the flight direction according to a default setting, this flight direction may be not the optimal flight direction for the unmanned aerial vehicle. In addition, when the flight direction is respectively specified by a user, each time a flight route of the unmanned aerial vehicle is generated, a user operation of inputting the wind direction is required, causing a reduction in convenience at the time of operation by the user.

Further, in Patent Document 1 mentioned above, the simultaneous suppression of a reduction in convenience at the time of operation by the user and generation of an optimal flight direction for the unmanned aerial vehicle is not considered.

## Means for Solving Problems

In one aspect of the invention, a flight route display method comprises the steps of: acquiring a flight range of an unmanned aerial vehicle; based on a flight direction index for a flight route of the unmanned aerial vehicle within the flight range, calculating an optimal flight route within the flight range; and displaying the optimal flight route within the flight range of the unmanned aerial vehicle.

The flight route display method may further comprise a step of acquiring at least one generation reference item for the flight route of the unmanned aerial vehicle. The step of calculating the flight route may further comprise a step of calculating, based on the at least one generation reference item and the flight direction index for the flight route of the unmanned aerial vehicle, the flight route.

The generation reference item may be an instruction indicating that the flight distance of the unmanned aerial vehicle is the shortest within the flight range.

The generation reference item may be an instruction indicating that the flight time of the unmanned aerial vehicle is the shortest within the flight range.

The generation reference item may be an instruction indicating that the power consumption of a battery when the unmanned aerial vehicle flies is the minimum within the flight range.

The step of acquiring the generation reference item may comprise a step of acquisition based on a selection from among the generation reference items of at least one flight route displayed on a display unit.

The step of displaying the flight route may comprise a step of displaying a flight direction within the flight range of the unmanned aerial vehicle.

The step of displaying the flight route may comprise a step of displaying both a flight start point and a flight end point within the flight range of the unmanned aerial vehicle.

The flight path display method may further comprise a step of instructing, in response to the selection of the flight start point, the movement of the unmanned aerial vehicle to the flight start point and the flight, according to the flight route, of the unmanned aerial vehicle.

The step of instructing the flight may comprise a step of instructing the unmanned aerial vehicle to take a photograph during flight according to the flight route.

The step of calculating the flight route may further comprise a step of calculating the flight direction, which gives the minimum value of the flight direction index, to be the flight direction within the flight range.

The flight route display method may further comprise a step of acquiring environment information about the unmanned aerial vehicle and a step of detecting the presence or absence of a change equal to or greater than a predetermined threshold value in the environment information . The step of calculating the flight route may comprise a step of calculating, based on the flight direction index, a flight direction within the flight range when a change equal to or greater than the predetermined threshold value in the environment information is detected.

The flight route display method may further comprise a step of dividing the flight range into multiple partial flight ranges according to the size of the flight range. The step of calculating the flight route may comprise a step of calculating, for each of the partial flight ranges and based on the flight direction index within a partial flight range according to the flight direction of the unmanned aerial vehicle, a flight route within the partial flight range. The step of displaying the flight route may comprise a step of displaying, for each of the partial flight ranges, the flight route within the partial flight range.

The flight route display method may further comprise a step of acquiring environment information about the unmanned aerial vehicle and a step of detecting the presence or absence of a change equal to or greater than a predetermined threshold value in the environment information . The step of calculating the flight route may comprise a step of calculating, based on the environment information and the flight direction index within a partial flight range next to any one of the partial flight ranges according to the flight direction of the unmanned aerial vehicle, a flight route within the next partial flight range when a change equal to or greater than the predetermined threshold value in the environment information is detected while the unmanned aerial vehicle flies within any one of the partial flight ranges.

The environment information about the unmanned aerial vehicle may be at least one of the wind direction and the wind speed around the unmanned aerial vehicle.

In another aspect of the invention, a mobile platform comprises: a first acquisition unit configured to acquire a flight range of an unmanned aerial vehicle; a calculation unit configured to calculate, based on a flight direction index for a flight route of the unmanned aerial vehicle within the flight range, an optimal flight route within the flight range; and a control unit configured to display, on a display unit, the optimal flight route within the flight range of the unmanned aerial vehicle.

The mobile platform may further comprise a second acquisition unit configured to acquire at least one generation reference item for the flight route of the unmanned aerial vehicle. The calculation unit may calculate, based on the at least one generation reference item and the flight direction index for the flight route of the unmanned aerial vehicle, the flight route.

The generation reference item may be an instruction indicating that the flight distance of the unmanned aerial vehicle is the shortest within the flight range.

The generation reference item may be an instruction indicating that the flight time of the unmanned aerial vehicle is the shortest within the flight range.

The generation reference item may be an instruction indicating that the power consumption of a battery when the unmanned aerial vehicle flies is the minimum within the flight range.

The second acquisition unit may carry out acquisition in response to a selection from among the at least one generation reference item for the flight route displayed on a display unit.

The control unit may display, on the display unit, the flight direction within the flight range of the unmanned aerial vehicle.

The control unit may display, on the display unit, both a flight start point and a flight end point within the flight range of the unmanned aerial vehicle.

The control unit may instruct the movement of the unmanned aerial vehicle to the flight start point and the flight, according to the flight route, of the unmanned aerial vehicle in response to the selection of the flight start point, which is displayed on the display unit.

The control unit may instruct the unmanned aerial vehicle to take a photograph in the flight along the flight route.

The calculation unit may calculate the flight direction, which gives the minimum value of the flight direction index, to be the flight direction within the flight range.

The first acquisition unit may acquire environment information about the unmanned aerial vehicle. The mobile platform may further include a detection unit configured to detect the presence or absence of a change equal to or greater than a predetermined threshold value in the environment information . The calculation unit may calculate, based on the flight direction index, a flight route within the flight range when a change equal to or greater than the predetermined threshold value in the environment information is detected.

The mobile platform may further include a division unit configured to divide the flight range into multiple partial flight ranges according to the size of the flight range. The calculation unit may calculate, for each of the partial flight ranges, a flight route within the partial flight range based on the flight direction index within the partial flight range according to the flight direction of the unmanned aerial vehicle. The control unit may display, on the display unit and for each of the partial flight ranges, the flight route within the partial flight range.

The first acquisition unit may acquire environment information about the unmanned aerial vehicle. The mobile platform may further include a detection unit configured to detect the presence or absence of a change equal to or greater than a predetermined threshold value in the environment information. The calculation unit may calculate, based on the environment information and the flight direction index within a partial flight range next to any one of the partial flight ranges according to the flight direction of the unmanned aerial vehicle, a flight route within the next partial flight range when a change equal to or greater than the predetermined threshold value in the environment information is detected while the unmanned aerial vehicle flies within any one of the partial flight ranges.

The environment information about the unmanned aerial vehicle may be at least one of the wind direction and the wind speed around the unmanned aerial vehicle.

The mobile platform may be an operation terminal which is connected to the display unit and which remotely controls the unmanned aerial vehicle, or a communication terminal which is connected to an operation terminal.

In a still further aspect of the invention, in a flight system an unmanned aerial vehicle and a mobile platform may be connected such that same can communicate. The mobile platform may acquire a flight range of an unmanned aerial vehicle; calculate, based on a flight direction index for a flight route of the unmanned aerial vehicle within the flight range, an optimal flight route within the flight range; and display, on a display unit, the flight route within the flight range of the unmanned aerial vehicle. The unmanned aerial vehicle may start a flight according to the flight route in response to an instruction regarding the flight route displayed on the display unit.

In a still further aspect of the invention, a recording medium may be a computer-readable recording medium on which is recorded a program for causing a mobile platform which is a computer to execute the steps of: acquiring a flight range of an unmanned aerial vehicle; calculating, based on a flight direction index for a flight route of the unmanned aerial vehicle within the flight range, an optimal flight route within the flight range; and displaying the optimal flight route within the flight range of the unmanned aerial vehicle.

A further aspect relates to a program, which may be a program for causing a mobile platform which is a computer to execute the steps of: acquiring a flight range of an unmanned aerial vehicle; calculating, based on a flight direction index for a flight route of the unmanned aerial vehicle within the flight range, an optimal flight route within the flight range; and displaying the optimal flight route within the flight range of the unmanned aerial vehicle.

The above summary of the invention does not list all the characteristics of the present disclosure. In addition, sub-combinations of groups of features may also be inventions.

## Brief Description of the Drawings

FIG. 1 is a diagram showing a configuration example of a flight system according to the present embodiment.
FIG. 2 is a perspective view showing an example of the appearance of a transmitter to which a communication terminal (e.g., a tablet terminal) is attached.
FIG. 3 is a perspective view showing an example of the appearance of a front side of a casing of a transmitter to which a communication terminal (e.g., a smartphone) is attached.
FIG. 4 is a perspective view showing another example of the appearance of the transmitter.
FIG. 5 is a block diagram showing an example of an electrical connection relationship between the transmitter and the communication terminal.
FIG. 6 is a block diagram showing, in detail, an example of the internal configuration of a transmitter control unit, a processor, and a UAV control unit.
FIG. 7 is a graph showing an example of the relationship between a flight direction (flight angle) and a flight cost.
FIG. 8 is a diagram showing an example of the appearance of an unmanned aerial vehicle.
FIG. 9 is a diagram showing an example of the specific appearance of an unmanned aerial vehicle.
FIG. 10 is a block diagram showing an example of the hardware configuration of an unmanned aerial vehicle.
FIG. 11A is an explanatory diagram of a flight route, generated based on a flight direction Op1, within a flight range AR1.
FIG. 11B is an explanatory diagram of a flight route, generated based on a flight direction Op2, within the flight range AR1.
FIG. 11C is an explanatory diagram of a flight route, generated based on a flight direction Op3, within the flight range AR1.
FIG. 12 is a diagram showing an example of a UI screen on which the flight routes of FIGS. 11A, 11B, and 11C are respectively displayed.
FIG. 13 is a flowchart showing, in detail, an example of an operation procedure of a flight route display method in a mobile platform (e.g., a communication terminal) of the present embodiment.
FIG. 14 is a explanatory diagram of a flight route in a partial flight range PR1 generated based on a flight direction Op4 and a flight route in a partial flight range PR2 generated based on a flight direction Op5 within multiple partial flight ranges PR1 and PR2, which constitute the flight range AR2.
FIG. 15 is a diagram showing an example of a UI screen on which the flight route in the partial flight ranges PR1 and PR2 in FIG 14 are respectively displayed.

FIG. 16 is a flowchart showing, in detail, an example of an operation procedure of a mobile platform (e.g., a communication terminal) according to a modified example.

**Description of Embodiments**

Hereinafter, the present disclosure will be described through embodiments of the invention; however, the following embodiments are not intended to limit the invention according to the claims. All combinations of the features described in the embodiments are not necessarily indispensable to the solution of the invention.

The claims, description, drawings, and abstract include matters subject to copyright protection. The copyright holder does not object to the copying, by any person, of these documents, as long as the documents are shown in the file or record of the Patent Office. However, in all other cases, all copyrights are reserved.

The flight system according to the present embodiment is a configuration including an unmanned aerial vehicle (UAV) as an example of a moving object and a mobile platform for remotely controlling the operation or processing of the unmanned aerial vehicle.

The unmanned aerial vehicle includes aircrafts moving through air (e.g., drones, and helicopters).

The mobile platform is a computer, which may be, for example, a transmitter for instructing remote control of various processes including movement of the unmanned aerial vehicle or a communication terminal connected to a transmitter so that information and data can be input and output. The unmanned aerial vehicle itself may also be included as a mobile platform.

In a flight route display method according to the present embodiment, for example, various processes (steps) in the mobile platform are defined.

A recording medium according to the present embodiment records a program (i.e., a program for causing the mobile platform to execute various processes (steps)).

The program according to the present embodiment is a program for causing the mobile platform to execute various processes (steps).

(Present Embodiment)

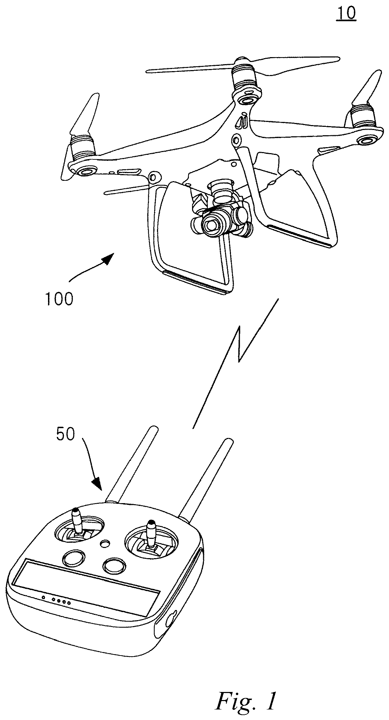

FIG. 1 is a diagram showing a configuration example of a flight system 10 according to the present embodiment. The flight system 10 shown in FIG. 1 includes at least an unmanned aerial vehicle 100, and a transmitter 50. The unmanned aerial vehicles 100 and the transmitter 50 can communicate information and data with each other by using wired communication or wireless communication (e.g., a wireless local area network (LAN)). In FIG. 1, the illustration of how the communication terminal 80 is attached to the casing of the transmitter 50, is not shown. The transmitter 50 as an example of an operation terminal is used in a state of being grasped with both hands of, for example, a person using the transmitter 50 (hereinafter referred to as "user").

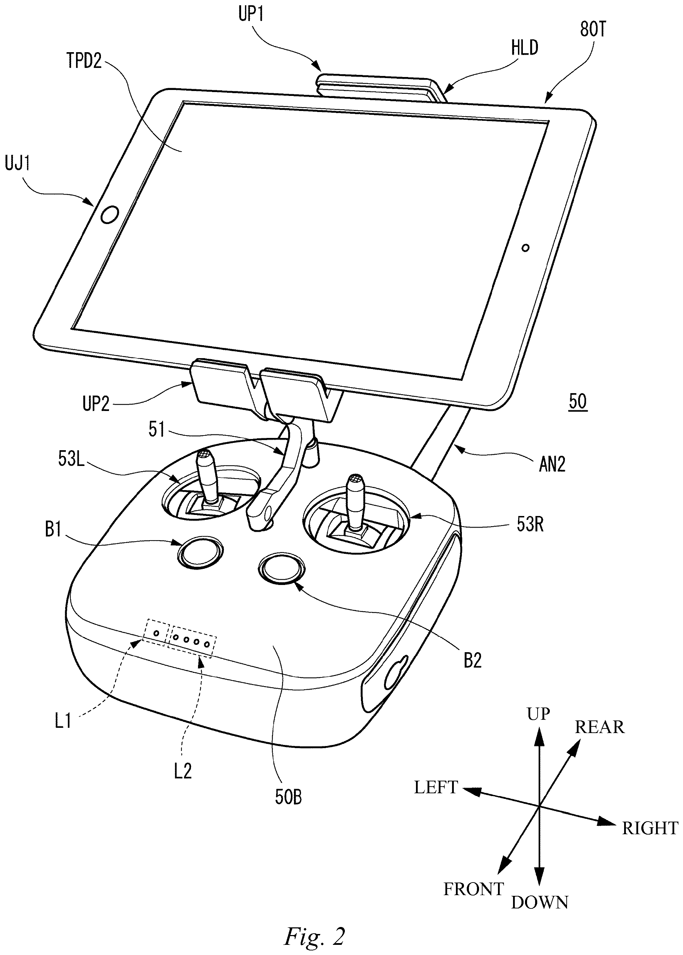

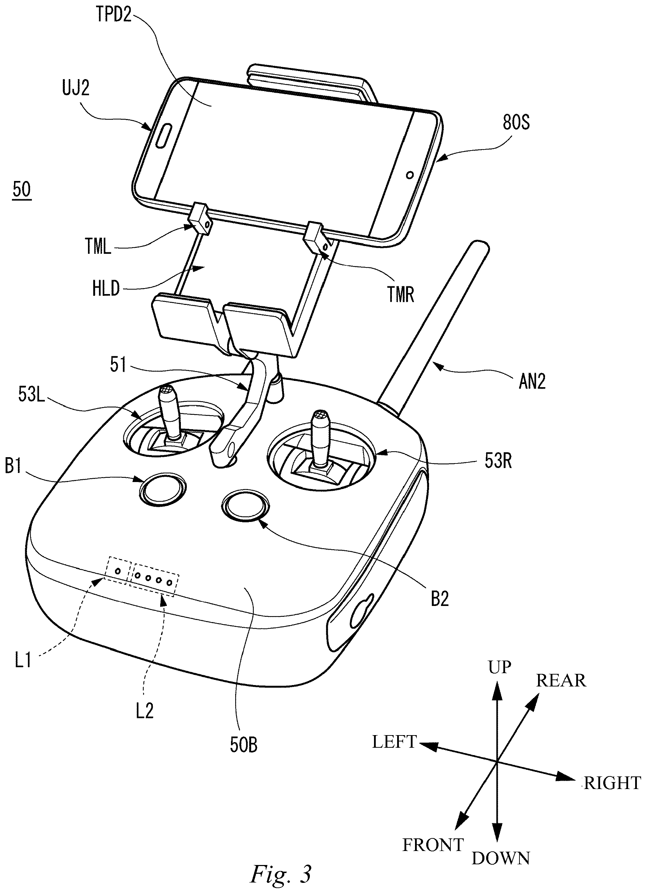

FIG. 2 is a perspective view showing an example of an appearance of the transmitter 50 to which the communication terminal (e.g., a tablet terminal 80T) is attached. In the present embodiment, directions of upper and lower, front and rear, left and right follow the directions of arrows shown in FIG. 2 or 3.

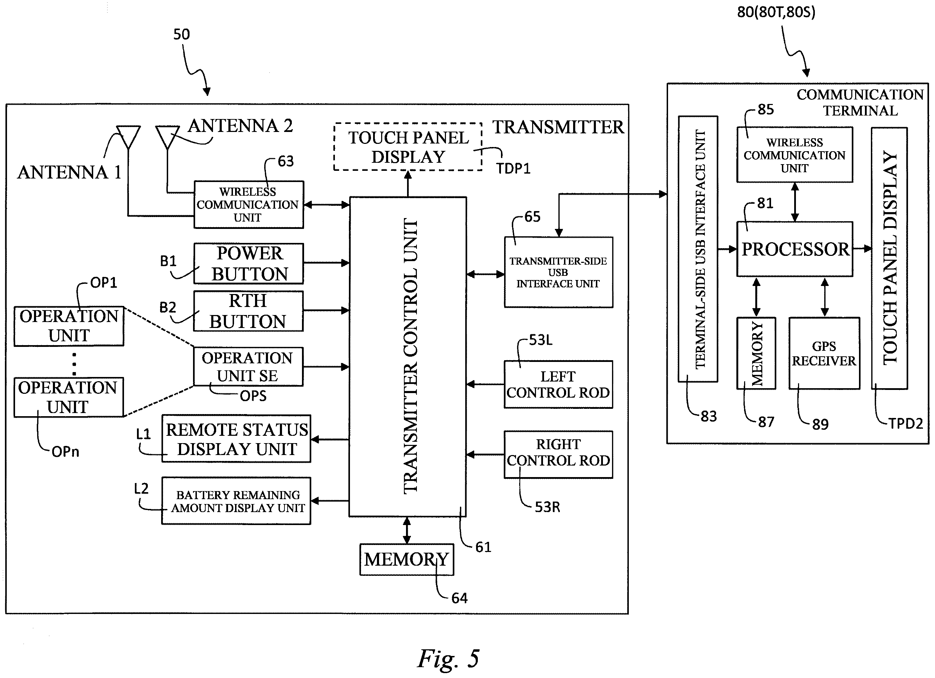

The transmitter 50 has, for example, a resin-made casing 50B having a substantially rectangular parallelepiped shape (in other words, substantially box shape) which has a substantially square bottom surface and a height shorter than one side of the bottom surface. A specific configuration of the transmitter 50 will be described later (see FIG. 5). A left control rod 53L and a right control rod 53R are disposed in a protruding manner so as to sandwich a holder supporting portion 51 substantially at the center of the casing surface of the transmitter 50.

The holder supporting portion 51 is formed by using, for example, a metal processed into a substantially T shape, and includes three joining portions. Among the three joining portions, two joining portions (a first joining portion and a second joining portion) are joined to the casing 50B, and one joining portion (a third joining portion) is joined to a holder HLD. The first joining portion is inserted in substantially the center of the surface of the casing 50B of the transmitter 50 (e.g., a position surrounded by the left control rod 53L, the right control rod 53R, a power button B1 and a RTH button B2). The second joining portion is inserted into the rear side of the surface of the casing 50B of the transmitter 50 (e.g., a position behind the left control rod 53L and the right control rod 53R) via a screw (not shown). The third joining portion is provided at a position away from the surface of the casing 50B of the transmitter 50, and is fixed to the holder HLD via a hinge (not shown). The third joining portion serves as a fulcrum for supporting the holder HLD. The holder supporting portion 51 supports the holder HLD in a state of being separated from the surface of the housing 50B of the transmitter 50. The angle of the holder HLD can be adjusted via a hinge by a user's operation.

The holder HLD includes a placement surface of the communication terminal (e.g., the tablet terminal 80T in FIG. 2), an upper end wall portion UP1 rising upward by approximately 90 degrees with respect to the placement surface at one end side of the placement surface, and a lower end wall portion UP2 rising upward by approximately 90 degrees with respect to the placement surface on the other end side of the placement surface. The holder HLD can fix and hold the tablet terminal 80T so as to sandwich the tablet terminal 80T among the upper end wall portion UP1, the placement surface, and the lower end wall portion UP2. The width of the placement surface (in other words, the distance between the upper end wall portion UP1 and the lower end wall portion UP2) can be adjusted by the user. The width of the placement surface is adjusted to be substantially the same as the width in one direction of the casing of the tablet terminal 80T such that the tablet terminal 80T is sandwiched, for example.

The left control rod 53L and the right control rod 53R are used , respectively, in operations for remotely controlling the movement of the unmanned aerial vehicle 100 by the user (e.g., back and forth movement, left and right movement, up and down movement, direction change of the unmanned aerial vehicle 100). In FIG. 2, the position of the left control rod 53L and the right control rod 53R at an initial state in which no external force is applied from both hands of the user. After the external force applied by the user is released, the left control rod 53L and the right control rod 53R automatically return to a predetermined position (e.g., the initial position shown in FIG. 2).

The power button B1 of the transmitter 50 is disposed on a front side of the left control rod 53L (in other words, a user side). When the user presses the power button B1 once, for example, the remaining capacity of a battery (not shown) built in the transmitter 50 is displayed on a remaining battery power display unit L2. When the user presses the power button B1 again, for example, a power supply of the transmitter 50 is turned on, and the power is supplied to each unit (see FIG. 5) of the transmitter 50 to be usable.

The RTH (Return To Home) B2 is disposed on the front side of the right control rod 53R (in other words, the user side). When the user presses the RTH button B2, the transmitter 50 transmits a signal, for automatically returning to a predetermined position, to the unmanned aerial vehicle 100. Accordingly, the transmitter 50 can automatically return the unmanned aerial vehicle 100 to a predetermined position (e.g., a takeoff position stored by the unmanned aerial vehicle 100). For example, when the user loses sight of the body of the unmanned aerial vehicle 100 during aerial photography performed by the unmanned aerial vehicle 100 outdoors, or when the unmanned aerial vehicle 100 encounters radio interference or unexpected trouble and becomes inoperable, the RTH button B2 can be used.

A remote status display unit L1 and the remaining battery power display unit L2 are disposed on the front side of the power button B1 and the RTH button B2 (in other words, the user side). The remote status display unit L1 is configured using, for example, an LED (Light Emission Diode), and displays a wireless connection state between the transmitter 50 and the unmanned aerial vehicle 100. The remaining battery power display unit L2 is configured using, for example, an LED, and displays the remaining capacity of the battery (not shown) built in the transmitter 50.

The tablet terminal 80T shown in FIG. 2 is provided with a USB connector UJ1 into which one end of a USB cable (not shown) is inserted. The tablet terminal 80T includes a touch panel display TPD2 as an example of a display unit. Therefore, the transmitter 50 can be connected to the touch panel display TPD2 of the tablet terminal 80T via the USB cable (not shown). In addition, the transmitter 50 includes a USB port (not shown) on the back side of the casing 50B. The other end of the USB cable (not shown) is inserted into the USB port (not shown) of the transmitter 50. Accordingly, the transmitter 50 can input and output information and data with the communication terminal 80 (e.g., the tablet terminal 80T) via, for example, the USB cable (not shown). The transmitter 50 may include a micro USB port (not shown). A micro USB cable (not shown) is connected to the micro USB port (not shown).

FIG. 3 is a perspective view showing an example of an appearance of a front side of the casing of the transmitter 50 to which the communication terminal (e.g., a smartphone 80S) is attached. In the description of FIG. 3, the same reference numerals will be given to the components which are the same as those in FIG. 2, and the description is simplified or omitted.

The holder HLD may include a left claw portion TML and a right claw portion TMR at a substantially central portion between the upper end wall portion UP1 and the lower end wall portion UP2. The left claw portion TML and the right claw portion TMR are tilted down along the placement surface when the holder HLD holds the tablet terminal 80T having a large width, for example. On the other hand, when the holder HLD holds the smartphone 80S narrower than the tablet terminal 80T, for example, the left claw portion TML and the right claw portion TMR stand at approximately 90 degrees upward with respect to the placement surface. Accordingly, the smartphone 80S is held by the upper end wall portion UP1, the left claw portion TML, and the right claw portion TMR of the holder HLD.

The smartphone 80S shown in FIG. 3 is provided with a USB connector UJ 2 into which one end of a USB cable (not shown) is inserted. The smartphone 80S includes a touch panel display TPD2 as an example of a display unit. Therefore, the transmitter 50 can be connected to the touch panel display TPD2 of the smartphone 80S via the USB cable (not shown). Accordingly, the transmitter 50 can input and output information and data with the communication terminal 80 (e.g., the smartphone 80S) via, for example, the USB cable (not shown).

In addition, two antennas AN1 and AN2 are disposed to protrude from a rear side surface of the casing 50B of the transmitter 50 and behind the left control rod 53L and the right control rod 53R. The antennas AN1 and AN2 transmit, based on the operation of the left control rod 53L and the right control rod 53R of the user, a signal (that is, a signal for controlling movement and processing of the unmanned aerial vehicle 100) generated by a transmitter control unit 61 to the unmanned aerial vehicle 100. The antennas AN1 and AN2 can cover a transmission and reception range of 2 km, for example. In addition, when images captured by imaging devices 220 and 230 (see below) possessed by the unmanned aerial vehicle 100 wirelessly connected to the transmitter 50 or various data (see below) acquired by the unmanned aerial vehicle 100 are transmitted from the unmanned aerial vehicle 100, the antennas AN1 and AN2 can receive these images or various data.

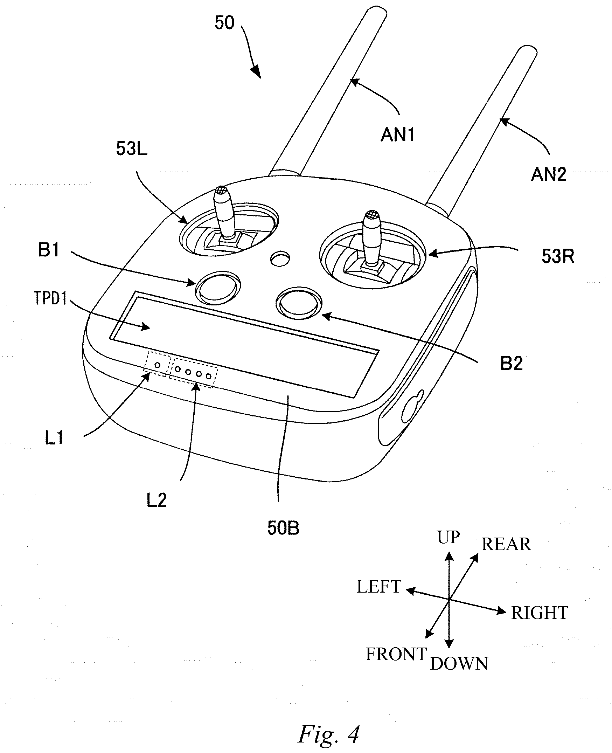

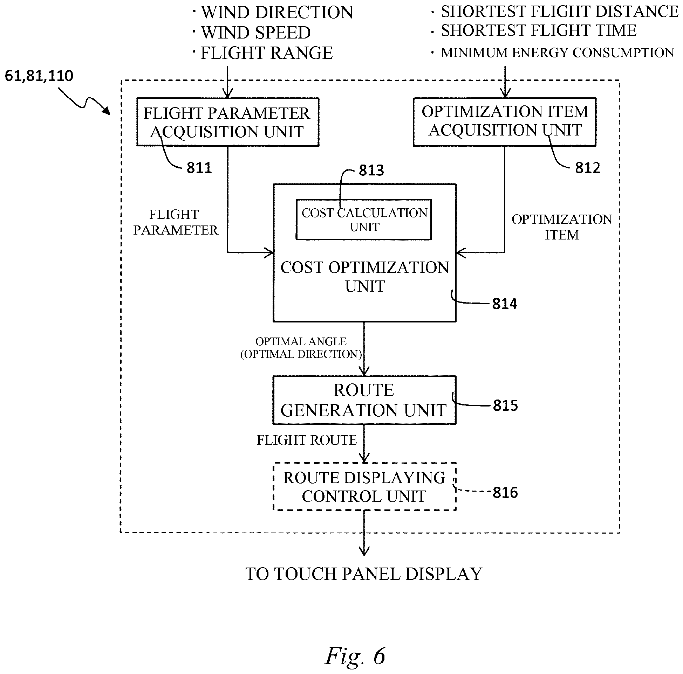

Further, the transmitter 50 may include a touch panel display TPD1 as an example of a display unit (see FIG. 4). FIG. 4 is a perspective view showing another example of the appearance of the transmitter 50. The touch panel display TPD1 is configured using, for example, an LCD (Crystal Liquid Display) or an organic EL (Electroluminescence). The shape, size, and arrangement position of the touch panel display TPD1 are arbitrary, and are not limited to the illustrated example of FIG. 6.

FIG. 5 is a block diagram showing an example of an electrical connection relationship between the transmitter 50 and the communication terminal 80. For example, as described with reference to FIG. 2 or 3, the transmitter 50 and the communication terminal 80 are connected such that information and data can be input and output via the USB cable (not shown).

The transmitter 50 includes the left control rod 53L, the right control rod 53R, the transmitter control unit 61, a wireless communication unit 63, a memory 64, a transmitter-side USB interface unit 65, the power button B1, the RTH button B2, an operation unit set OPS, the remote status display unit L1, and the remaining battery power display unit L2. The transmitter 50 may include the touch panel display TPD1 capable of detecting a user operation (e.g., a touch or a tap).

The left control rod 53L is used for an operation for remotely controlling the movement of the unmanned aerial vehicle 100, for example, by the left hand of the user. The right control rod 53R is used for an operation for remotely controlling the movement of the unmanned aerial vehicle 100, for example, by the right hand of the user. The movement of the unmanned aerial vehicle 100 includes any one of, for example, a movement in a forward direction, a movement in a backward direction, a movement in a left direction, a movement in a right direction, a movement in an upward direction, a movement in a descent direction, a leftward turning movement, a rightward turning movement, or a combination thereof, which is the same below.

The transmitter control unit 61 as an example of a control unit is configured using a processor (e.g., a CPU (Central Processing Unit), an MPU (Micro Processing Unit), or a DSP (Digital Signal Processor)). The transmitter control unit 61 performs signal processing for integrating and controlling operations of each unit of the transmitter 50, input/output processing of data with other units, data arithmetic processing and data storage processing.

The transmitter control unit 61 operates as a flight parameter acquisition unit 811, an optimization item acquisition unit 812, a cost calculation unit 813, a cost optimization unit 814, a route generation unit 815, and a route displaying control unit 816 shown in FIG. 6 by reading and executing the program and data stored in the memory 64. Details of the operation of each of these units will be described later with reference to FIG. 6.

In addition, the transmitter control unit 61 generates a signal for controlling the movement of the unmanned aerial vehicle 100 specified by the operation, by operating the left control rod 53L and the right control rod 53R of the user, for example. The transmitter control unit 61 transmits, via the wireless communication unit 63 and the antennas AN1 and AN2, the generated signal to the unmanned aerial vehicle 100 to remotely control the unmanned aerial vehicle 100. Accordingly, the transmitter 50 can remotely control the movement of the unmanned aerial vehicle 100.

In addition, the transmitter control unit 61 acquires data of an aerial image captured by the imaging device 220 of the unmanned aerial vehicle 100 via the wireless communication unit 63, saves the data of the aerial image in the memory 64, and displays the data of the aerial image on the touch panel display TPD1. Accordingly, the aerial image captured by the imaging device 220 of the unmanned aerial vehicle 100 can be displayed on the touch panel display TPD1 of the transmitter 50.

In addition, the transmitter control unit 61 may output, for example, the data of the aerial image captured by the imaging device 220 of the unmanned aerial vehicle 100 to the communication terminal 80 via the transmitter-side USB interface unit 65. That is, the transmitter control unit 61 may cause the data of the aerial image to be displayed on the touch panel display TPD2 of the communication terminal 80. Accordingly, the aerial image captured by the imaging device 220 of the unmanned aerial vehicle 100 can be displayed on the touch panel display TPD2 of the communication terminal 80.

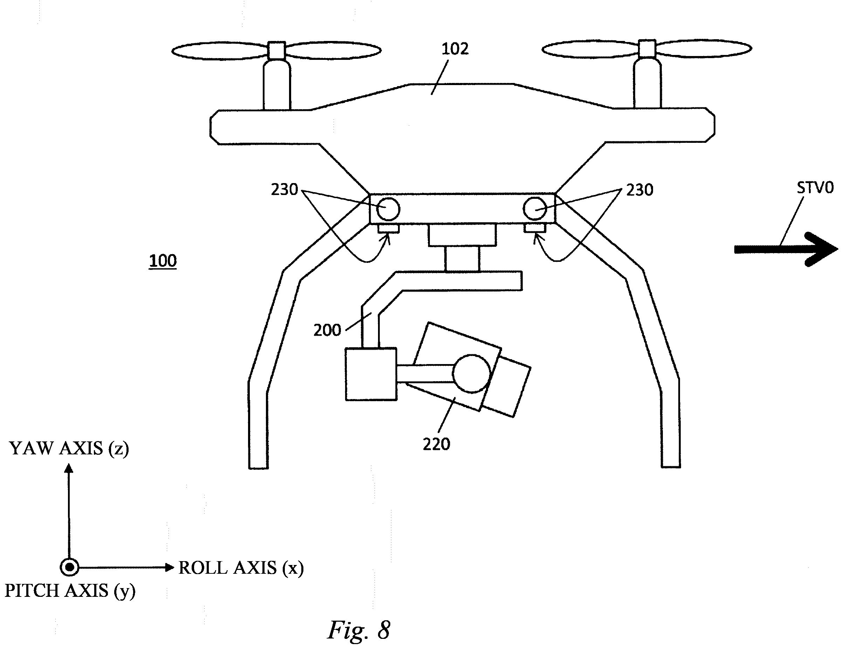

The wireless communication unit 63 is connected to the two antennas AN1 and AN2. The wireless communication unit 63 transmits and receives information and data using a predetermined wireless communication method (e.g., a wireless LAN (Local Area Network) such as Wifi®) with the unmanned aerial vehicle 100 via the two antennas AN1 and AN2. The wireless communication unit 63 receives the data of the aerial image captured by the imaging device 220 of the unmanned aerial vehicle 100, for example, by wireless communication with the unmanned aerial vehicle 100. The wireless communication unit 63 outputs the data of the aerial image to the transmitter control unit 61. In addition, the wireless communication unit 63 receives position information on the unmanned aerial vehicle 100 calculated by the unmanned aerial vehicle 100 having a GPS receiver 240 (see FIG. 8). The wireless communication unit 63 outputs the position information on the unmanned aerial vehicle 100 to the transmitter control unit 61.

The memory 64 includes, for example, a ROM (Read Only Memory) for storing programs defining the operation (e.g., a process (step) performed as the flight route display method according to the present embodiment) of the transmitter control unit 61 and setting value data and a RAM (Random Access Memory) for temporarily saving various kinds of information and data used at the time of processing of the transmitter control unit 61. Programs and setting value data stored in the ROM of the memory 64 may be copied to a predetermined recording medium (e.g., CD-ROM and DVD-ROM). For example, the data of the aerial image captured by the imaging device 220 of the unmanned aerial vehicle 100 are saved in the RAM of the memory 64.

The transmitter-side USB interface unit 65 inputs and outputs information and data between the transmitter 50 and the communication terminal 80. The transmitter-side USB interface unit 65 is configured by, for example, a USB port (not shown) provided in the transmitter 50.

When the power button B1 is pressed once, a signal indicating that the power button B1 has been pressed once is input to the transmitter control unit 61. According to this signal, the transmitter control unit 61 displays the remaining capacity of the battery (not shown) built in the transmitter 50 on the remaining battery power display unit L2. Accordingly, the user can easily confirm the remaining capacity of the battery built in the transmitter 50. In addition, when the power button B1 is pressed again, a signal indicating that the power button B1 has been pressed again is sent to the transmitter control unit 61. According to this signal, the transmitter control unit 61 instructs the battery (not shown) built in the transmitter 50 to supply power to each unit in the transmitter 50. Accordingly, the user turns on the power supply of the transmitter 50 and can easily start using the transmitter 50.

When the RTH bottom B2 is pressed, a signal indicating that the signal has been pressed is input to the transmitter control unit 61. According to this signal, the transmitter control unit 61 generates a signal for automatically returning the unmanned aerial vehicle 100 to a predetermined position (e.g., the takeoff position of the unmanned aerial vehicle 100) and transmits the signal to the unmanned aerial vehicle 100 via the wireless communication unit 63 and the antennas AN1 and AN2. Accordingly, the user can automatically return the unmanned aerial vehicle 100 to a predetermined position by a simple operation on the transmitter 50.

The operation unit set OPS is configured using multiple operation units (e.g., operation units OP1, ..., operation unit OPn) (n: an integer of 2 or more). The operation unit set OPS is constituted by other operation units (e.g., various operation units for supporting the remote control of the unmanned aerial vehicle 100 by the transmitter 50) except for the left control rod 53L, the right control rod 53R, the power button B1 and the RTH button B2 shown in FIG. 4. The various operation units mentioned here corresponds to, for example, a button for instructing the capturing of a still image using the imaging device 220 of the unmanned aerial vehicle 100, a button for instructing start and end of video recording using the imaging device 220 of the unmanned aerial vehicle 100, a dial for adjusting the inclination of a gimbal 200 (see FIG. 8) of the unmanned aerial vehicle 100 in an inclination direction, a button for switching the flight mode of the unmanned aerial vehicle 100, and a dial for setting the imaging device 220 of the unmanned aerial vehicle 100.

Since the remote status display unit L1 and the remaining battery power display unit L2 have been described with reference to FIG. 1, the description thereof is omitted here.

The touch panel display TPD1 is configured using, for example, a liquid crystal display (LCD) or an EL (Electroluminescence), and displays various kinds of information and data output from the transmitter control unit 61. The touch panel display TPD1 displays, for example, data of an aerial image captured by the unmanned aerial vehicle 100. The touch panel display TPD1 can detect an input operation of a user operation (e.g., touch or tap).

The communication terminal 80 includes a processor 81, a terminal-side USB interface unit 83, a wireless communication unit 85, a memory 87, a GPS (Global Positioning System) receiver 89, and the touch panel display TPD2. The communication terminal 80 is, for example, a tablet terminal 80T (see FIG. 2) or a smartphone 80S (see FIG. 3).

The processor 81 is configured using, for example, a CPU, an MPU, or a DSP. The terminal control unit 81 performs signal processing for integrating and controlling operations of each unit of the communication terminal 80, input/output processing of data with other units, data arithmetic processing and data storage processing.

The processor 81 operates as a flight parameter acquisition unit 811, an optimization item acquisition unit 812, a cost calculation unit 813, a cost optimization unit 814, a route generation unit 815, and a route displaying control unit 816 shown in FIG. 6 by reading and executing the program and data stored in the memory 87. Details of the operation of each of these units will be described later with reference to FIG. 6.

For example, the processor 81 saves image data acquired via the terminal-side USB interface unit 83 in the memory 87 and displays the image data on the touch panel display TPD2. In other words, the processor 81 displays the data of the aerial image captured by the unmanned aerial vehicle 100 on the touch panel display TPD2.

The terminal-side USB interface unit 83 inputs and outputs information and data between the communication terminal 80 and the transmitter 50. The terminal-side USB interface unit 83 is constituted by, for example, a USB connector UJ1 provided in the tablet terminal 80T or a USB connector UJ2 provided in the smartphone 80S.

The wireless communication unit 85 is connected to a wide area network (not shown) such as the Internet via an antenna (not shown) built in the communication terminal 80. The wireless communication unit 85 transmits and receives information and data to and from another communication device (not shown) connected to the wide area network.

The memory 87 includes, for example, a ROM for storing programs defining the operation (e.g., a process (step) performed as the flight route display method according to the present embodiment) of the communication terminal 80 and setting value data and a RAM for temporarily saving various kinds of information and data used at the time of processing of the processor 81. Programs and setting value data stored in the ROM of the memory 87 may be copied to a predetermined recording medium (e.g., CD-ROM and DVD-ROM). For example, the data of the aerial image captured by the imaging device 220 of the unmanned aerial vehicle 100 are saved in the RAM of the memory 87.

The GPS receiver 89 receives multiple signals indicating the time and the position (coordinate) of each GPS satellite transmitted from multiple navigation satellites (i.e., GPS satellites). The GPS receiver 89 calculates, based on the multiple received signals, the position of the GPS receiver 89 (i.e., the position of the communication terminal 80). The communication terminal 80 and the transmitter 50 are connected via the USB cable (not shown), and the two are considered to be at nearly the same position. Thus, the position of the communication terminal 80 can be considered to be substantially the same as the position of the transmitter 50. Although being described to be provided in the communication terminal 80, the GPS receiver 89 may also be provided in the transmitter 50. The connection method between the communication terminal 80 and the transmitter 50 is not limited to the wired connection using a USB cable CBL, and may be a wireless connection with a predetermined short distance wireless communication (e.g., Bluetooth (registered trademark) or Bluetooth (registered trademark) Low Energy). The GPS receiver 89 outputs position information on the communication terminal 80 to the processor 81. Calculation of the position information on the GPS receiver 89 may be performed by the processor 81 instead of the GPS receiver 89. In this case, the information indicating the time and the position of each GPS satellite, included in the multiple signals received by the GPS receiver 89, are input to the processor 81.

The touch panel display TPD2 is configured using, for example, a LCD or an EL, and displays various kinds of information and data output from the processor 81. The touch panel display TPD2 displays, for example, data of an aerial image captured by the unmanned aerial vehicle 100. The touch panel display TPD2 can detect an input operation of a user operation (e.g., touch or tap).

FIG. 6 is a block diagram showing in detail an example of an internal configuration of the transmitter control unit 61, the processor 81, and the UAV control unit 110. In the following description of FIG. 6, the processor 81 is exemplified, and the communication terminal 80 is exemplified as a mobile platform according to the present embodiment. However, in the description of FIG. 6, the transmitter control unit 61 and the UAV control unit 110 are exemplified respectively, and the transmitter 50 and the unmanned aerial vehicle 100 are exemplified as the mobile platform according to the present embodiment, respectively.

The processor 81 includes the flight parameter acquisition unit 811, the optimization item acquisition unit 812, the cost optimization unit 814, the route generation unit 815, and the route displaying control unit 816. The cost optimization unit 814 includes the cost calculation unit 813.

The flight parameter acquisition unit 811 as an example of a first acquisition unit acquires information on the flight range of the unmanned aerial vehicle 100 and environment information on the unmanned aerial vehicle 100 as information on parameters related to the flight (hereinafter referred to as "flight parameter") of the unmanned aerial vehicle 100, and outputs the information to the cost optimization unit 814. The information on the flight route of the unmanned aerial vehicle 100 is specified, for example, by a user operation (e.g., dragging) on a flight map displayed on the touch panel display TPD2.

The environment information on the unmanned aerial vehicle 100 is, for example, weather information (information indicating a sunny day, information indicating a cloudy day, information indicating that rain or snow is falling), and information on wind direction and wind speed around the unmanned aerial vehicle 100. Accordingly, the communication terminal 80 can generate a flight route in consideration of the wind speed and wind direction which affect the flight of the unmanned aerial vehicle 100 and can cause the unmanned aerial vehicle 100 to perform efficient aerial photography. The environment information on the unmanned aerial vehicle 100 may be, for example, input by the user, or may be acquired by the communication terminal 80 constantly or periodically from an external information providing site via the Internet or the like.

The optimization item acquisition unit 812 as an example of a second acquisition unit acquires at least one piece of information on a generation reference item (in other words, an item prioritized in generating the flight route, hereinafter referred to as "optimization item") when generating the flight route of the unmanned aerial vehicle 100 and outputs the information to the cost optimization unit 814. In the following description, three optimization items are listed, for example. The information on the optimization item is specified, for example, by a user operation (e.g., touch or tap) on a menu screen of an application displayed on the touch panel display TPD2. At least one piece of information on the optimization item is specified, and two pieces of information may be specified, or all three pieces of information may be specified.

A first optimization item is an instruction indicating that the flight distance of the unmanned aerial vehicle 100 is the shortest within the flight range specified by the user. Accordingly, the communication terminal 80 can generate a flight route having a shortest flight distance of the unmanned aerial vehicle 100.

A second optimization item is an instruction indicating that the flight time of the unmanned aerial vehicle 100 is the shortest within the flight range specified by the user. Accordingly, the communication terminal 80 can generate a flight route having a shortest flight time of the unmanned aerial vehicle 100.

A third optimization item is an instruction indicating that the power consumption of a battery 170 at the time of flight of the unmanned aerial vehicle 100 is minimized within the flight range specified by the user. Accordingly, the communication terminal 80 can generate a flight route that minimizes the consumption of the battery at the time of flight of the unmanned aerial vehicle 100.

The first to third optimization items are displayed as an example of the menu screen of the application of the touch panel display (e.g., the touch panel display TPD2), and at least one optimization item is selected by the user operation. Depending on the selection, information on at least one selected optimization item among the first to third optimization items is input to the optimization item acquisition unit 812. Accordingly, the user can easily select an optimization item of interest among the first to third optimization items displayed on the touch panel display (e.g., the touch panel display TPD2), and confirm the flight route corresponding to the selected optimization item.

The cost calculation unit 813 as an example of a calculation unit acquires information on the flight parameters output from the flight parameter acquisition unit 811 and information on the optimization item output from the optimization item acquisition unit 812. The cost calculation unit 813 calculates, based on the on the flight parameters and the information on the optimization items, a flight direction index (hereinafter referred to as "flight cost") according to the flight direction (in other words, with respect to the flight route) of the unmanned aerial vehicle 100 within the flight range and outputs the calculation result to the cost optimization unit 814. That is, the flight cost indicates the cost (in other words, a load when flying along the flight route of the unmanned aerial vehicle 100) for the flight route (also referred to as "flight route") of the unmanned aerial vehicle 100 and varies depending on the flight direction (flight angle) of the unmanned aerial vehicle 100 flying within the flight range specified by the user.

The cost calculation unit 813 calculates the flight cost using different cost functions for each optimization item. In other words, the cost function differs according to an instruction to generate a flight route having the shortest flight distance, an instruction to generate a flight route having the shortest flight time, and an instruction to generate a flight route minimizing the battery consumption at the time of the flight of the unmanned aerial vehicle 100, and is designed in consideration of the influence of the wind direction, the wind speed, or the like.

The cost calculation unit 813 calculates the flight cost according to Equation (1), for example, when an instruction to generate a flight route having the shortest flight distance is specified as an optimization item. When it is assumed that the unmanned aerial vehicle 100 will fly within a flight range specified by the user, the sum total of the distances between the respective waypoints is calculated as the flight cost, according to Equation (1). In Equation (1), P represents an array of waypoints, and the waypoints are defined as passing points that should be referred to in order for the unmanned aerial vehicle 100 to confirm the position thereof at the time of the flight of the unmanned aerial vehicle 100. The cost calculation unit 813 assigns multiple parallel lines (not shown) to the flight range included in the information on the flight parameters, for example, and determines multiple positions included in the lines as the waypoints, which is the same below. Accordingly, the cost calculation unit 813 can acquire the position information on each waypoint and can specifically grasp the value of p. However, the method of determining the waypoint is not limited to the above method of allocating and determining multiple parallel lines. In Equation (1), p represents the position of the unmanned aerial vehicle 100, i represents an ordinal number (i.e., an integer from 1 to (n-1)), and n represents the number of the waypoints.

[Equation 1]

$$C(P) = \sum_{i=1}^{n-1} | \, p_i - p_{i+1} \, | \, ...(1)$$

The cost calculation unit 813 calculates the flight cost according to Equation (2), for example, when an instruction to generate a flight route having the shortest flight time is specified as an optimization item. When it is assumed that the unmanned aerial vehicle 100 will fly within a flight range specified by the user, the sum total of the flight time of the unmanned aerial vehicle 100 flying between the respective waypoints is calculated as the flight cost, according to Equation (2). In Equation (2), P represents an array of the waypoints. In Equation (2), p represents the position of the unmanned aerial vehicle 100, i represents an ordinal number (i.e., an integer from 1 to (n-1)), n represents the number of the waypoints, and VI represents a ground flying speed of the unmanned aerial vehicle 100 (that is., a moving speed of the unmanned aerial vehicle 100). VI is measured in the unmanned aerial vehicle 100, transmitted from the unmanned aerial vehicle 100 to the transmitter 50, and input to the communication terminal 80 via the transmitter 50.

[Equation 2]

$$C(P, V1) = \sum_{i=1}^{n-1} \frac{| \, p_i - p_{i+1} \, |}{V1} ...(2)$$

The cost calculation unit 813 calculates the flight cost according to Equation (3), for example, when an instruction to generate a flight route minimizing the battery consumption at the time of the flight of the unmanned aerial vehicle 100 is specified as an optimization item. When it is assumed that the unmanned aerial vehicle 100 will fly within a flight range specified by the user, the sum total of the power consumption of the unmanned aerial vehicle 100 flying between the respective waypoints is calculated as the flight cost, according to Equation (3). In Equation (3), P represents an array of the waypoints. In Equation (3), p represents the position of the unmanned aerial vehicle 100, i represents an ordinal number (i.e., an integer from 1 to (n-1)), n represents the number of the waypoints, and V1 represents a ground flying speed of the unmanned aerial vehicle 100 (i.e., a moving speed of the unmanned aerial vehicle 100). V2 represents a wind speed vector, and f(V2) represents a function outputting a value of the power consumption of the unmanned aerial vehicle 100 according to the wind speed.

[Equation 3]

$$C(P, V1, V2) = \sum_{i=1}^{n-1} \frac{|p_i - p_{i+1}| \times f(V2)}{V1} \quad ...(3)$$

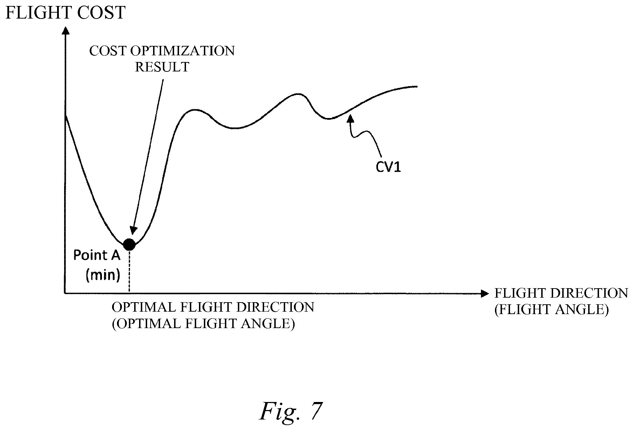

The cost optimization unit 814 as an example of the calculation unit calculates an optimal flight direction (flight angle) of the unmanned aerial vehicle 100 flying within the flight range specified by the user, based on the calculation result (i.e., flight cost) for each optimization item of the cost calculation unit 813. The cost optimization unit 814 outputs the calculation result (i.e., the optimal flight direction (flight angle)) to the route generation unit 815. Specifically, the cost optimization unit 814 searches for and figures out the flight direction (flight angle) giving the minimum value of each flight cost for each flight cost calculated by the Equations (1) to (3), and calculates the optimal flight direction (flight angle) of the unmanned aerial vehicle 100 flying within the flight range (see FIG. 7). As methods for searching for the flight direction (flight angle) giving the minimum value of the flight cost performed by the cost optimization unit 814, for example, methods such as a full search method, a bisection method, and a LM (Levenberg-Marquardt) method are known.

FIG. 7 is a graph showing an example of a relationship between the flight direction (flight angle) and the flight cost. FIG. 7 shows a curve CV1 in which the horizontal axis represents the flight direction (flight angle), and the vertical axis represents the flight cost (in other words, the calculation result calculated by using the Equations (1) to (3), e.g., the calculation result of Equation (1).). FIG. 7 shows the result using a full search method (i.e., a method of searching for the minimum value of the calculation result of Expression (1) with a total flight direction of 0° to 360° as a variable) as a known method, for example. As described above, the flight cost as the calculation result of Expression (1) varies depending on the flight direction (flight angle) of the unmanned aerial vehicle 100 flying within the flight range specified by the user. That is, the flight cost on the vertical axis of FIG. 7 varies depending on the flight direction (flight angle) on the horizontal axis of FIG. 7. Although the description of searching for the minimum value of the calculation result for each of Equations (1) to (3) using a dichotomy method or an LM method is omitted, the dichotomy method or the LM method can be easily realized by known techniques as the full search method.

The cost optimizing unit 814 calculates a corresponding point (i.e., Point A in FIG. 7) on the horizontal axis of FIG 7 when the minimum value of the flight cost on the vertical axis of FIG. 7 is obtained as the flight direction (flight angle) of the unmanned aerial vehicle 100 when the minimum flight cost (i.e., optimal flight cost) is obtained. Accordingly, since the communication terminal 80 can calculate a direction with the lowest flight cost when the unmanned aerial vehicle 100 is flying within the flight range as the flight direction (flight angle) of the unmanned aerial vehicle 100 for each optimization item specified by the user, the flight route of the unmanned aerial vehicle 100 satisfying the optimization item can be efficiently generated.

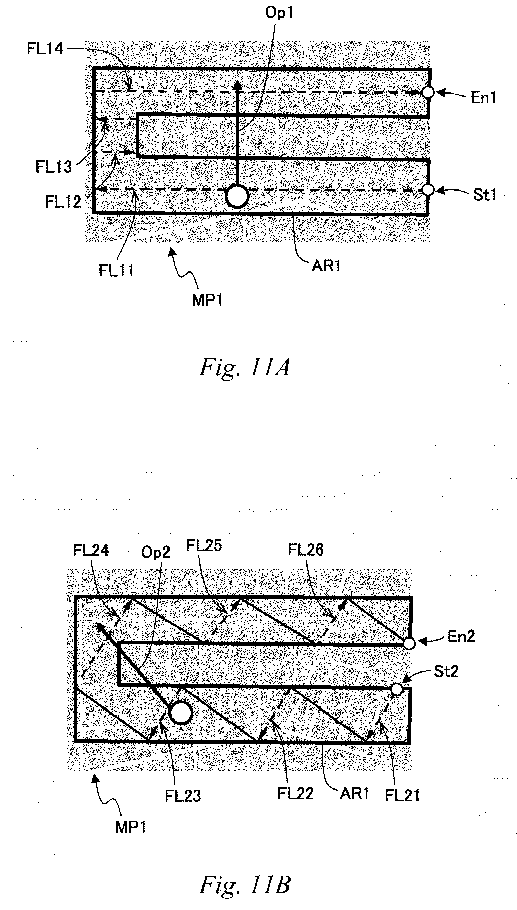

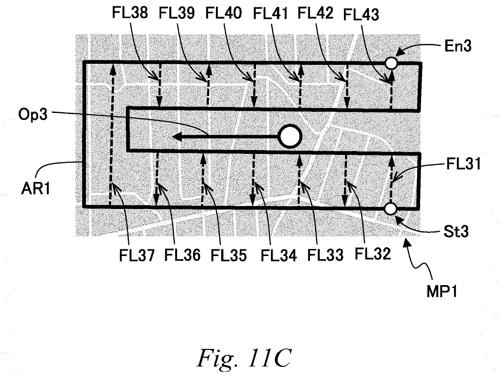

The route generation unit 815 as an example of the calculation unit acquires information on the flight direction (flight angle) output from the cost optimization unit 814, and, based on the information on the flight direction (flight angle), calculates and generates an optimal flight route (flight route) of the unmanned aerial vehicle 100 within a flight range specified by the user. The route generation unit 815 outputs the data of the flight route of the unmanned aerial vehicle 100 to the route displaying control unit 816. The route generation unit 815 calculates and generates a flight route of the unmanned aerial vehicle 100 by, for example, allocating multiple lines parallel to and multiple lines perpendicular to the flight direction (flight angle) output from the cost optimization unit 814 within the flight range specified by the user. Specific examples of the flight route will be described later with reference to FIGS. 11A, 11B, and 11C. The method for generating the flight route of the unmanned aerial vehicle 100 in the route generation unit 815 is not limited to the above method.

The route displaying control unit 816 as an example of a control unit displays the data of the unmanned aerial vehicle 100 output from the route generation unit 815 to a touch panel display (e.g., the touch panel display TPD2). The route displaying control unit 816 may superimpose and display the flight route in the flight range on the flight map when the flight map and the flight range specified by the user are to be displayed on the touch panel display. Accordingly, the user can visually and specifically recognize along which route the unmanned aerial vehicle 100 is flying within the flight range specified by himself/herself on the touch panel display. Since the unmanned aerial vehicle 100 does not include a touch panel display, the configuration of the route displaying control unit 816 may be omitted when each unit shown in FIG. 6 is configured in the UAV control unit 110.

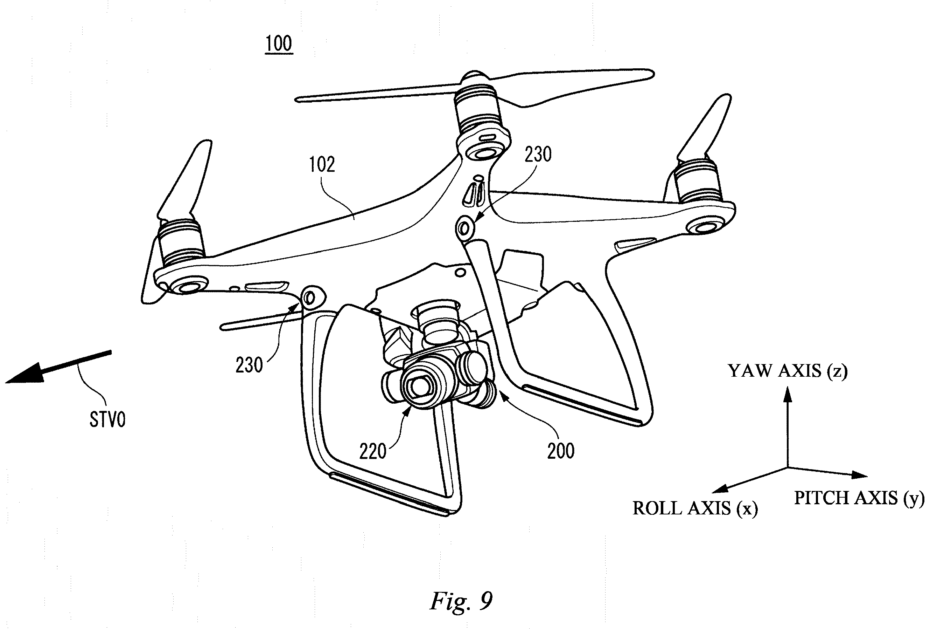

FIG. 8 is a diagram showing an example of an appearance of the unmanned aerial vehicle 100. FIG. 9 is a diagram showing an example of a specific appearance of the unmanned aerial vehicle 100. FIG. 8 shows a side view of the unmanned aerial vehicle 100 flying in a moving direction STV0. and FIG. 9 shows a perspective view of the unmanned aerial vehicle 100 flying in the moving direction STV0. The unmanned aerial vehicle 100 is an example of a moving object including imaging devices 220 and 230. The moving object refers to a concept including, in addition to the unmanned aerial vehicle 100, another aircraft moving in the air, a vehicle moving on the ground, a ship moving on water, and the like. Here, as shown in FIGS. 8 and 9, a roll axis (see the x axis in FIGS. 8 and 9) is defined in a direction parallel to the ground and along the moving direction STV0. In this case, a pitch axis (see the y axis in FIGS. 8 and 9) is defined in a direction parallel to the ground and perpendicular to the roll axis, and a yaw axis (see the z axis in FIGS. 8 and 9) is defined in a direction perpendicular to the ground and perpendicular to the roll axis and the pitch axis.

The unmanned aerial vehicle 100 includes a UAV main body 102, a gimbal 200, a imaging device 220, and multiple imaging devices 230. The unmanned aerial vehicle 100 moves based on an instruction of remote control transmitted from the transmitter 50 as an example of the mobile platform of the present embodiment.

The UAV main body 102 includes multiple rotary wings. The UAV main body 102 controls rotation of the multiple rotary wings to cause the unmanned aerial vehicle 100 to fly. The UAV main body 102 causes the unmanned aerial vehicle 100 to fly, for example, using four rotary wings. The number of the rotary wings is not limited to four. In addition, the unmanned aerial vehicle 100 may also be a fixed-wing aircraft without rotary wings.

The imaging device 220 is a photographing camera for photographing a subject included in a desired imaging range (e.g., the state of the sky as an aerial photographing target, and the scenery such as mountains and rivers).

The multiple imaging devices 230 are sensing cameras for photographing surroundings of the unmanned aerial vehicle 100 to control the flight of the unmanned aerial vehicle 100. Two imaging devices 230 may be provided on a front surface, i.e., the nose, of the unmanned aerial vehicle 100. Further, two imaging devices 230 may be provided on a bottom surface of the unmanned aerial vehicle 100. The two imaging devices 230 on the front side are paired and may function as a so-called stereo camera. The two imaging devices 230 on the bottom side are also paired and may function as a so-called stereo camera. Three-dimensional spatial data around the unmanned aerial vehicle 100 may be generated based on the image captured by the multiple imaging devices 230. The number of the imaging devices 230 included in the unmanned aerial vehicle 100 is not limited to four. The unmanned aerial vehicle 100 may include at least one imaging device 230. The unmanned aerial vehicle 100 may include at least one imaging device 230 on the nose, the tail, a lateral surface, the bottom surface, and a ceiling surface of the unmanned aerial vehicle 100 separately. An angle of view that can be set by the imaging devices 230 may be larger than an angle of view that can be set by the imaging device 220. The imaging device 230 may include a single focus lens or a fisheye lens.

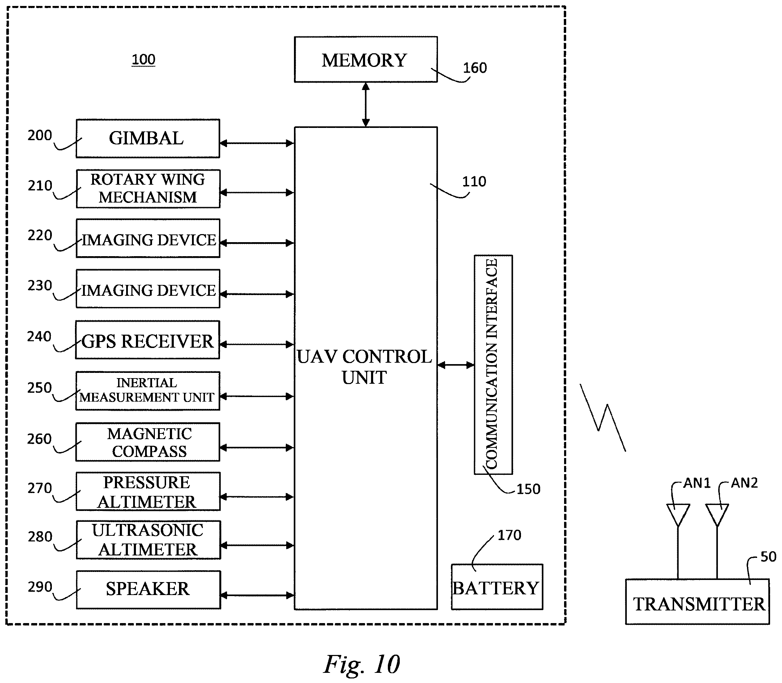

FIG. 10 is a block diagram showing an example of a hardware configuration of the unmanned aerial vehicle 100. The unmanned aerial vehicle 100 includes the UAV control unit 110, a communication interface 150, a memory 160, a battery 170, the gimbal 200, a rotary wing mechanism 210, the imaging device 220, the imaging device 230, a GPS receiver 240, an inertial measurement unit (IMU) 250, a magnetic compass 260, a pressure altimeter 270, an ultrasonic altimeter 280, and a speaker 290.

The UAV control unit 110 is configured using, for example, a CPU, an MPU or a DSP. The UAV control unit 110 performs signal processing for integrating and controlling operations of each unit of the unmanned aerial vehicle 100, input/output processing of data with other units, data arithmetic processing and data storage processing.

The UAV control unit 110 controls the flight of the unmanned aerial vehicle 100 according to a program stored in the memory 160. The UAV control unit 110 controls the flight of the unmanned aerial vehicle 100 according to a command received from the remote transmitter 50 via the communication interface 150. The memory 160 may be removable from the unmanned aerial vehicle 100.

The UAV control unit 110 may specify the surrounding environment of the unmanned aerial vehicle 100 by analyzing multiple images captured by the multiple imaging devices 230. The UAV control unit 110 controls, based on the surrounding environment of the unmanned aerial vehicle 100, the flight to avoid, for example, obstacles. The UAV control unit 110 may generate, based on multiple images captured by the multiple imaging devices 230, three-dimensional spatial data of the surrounding of the unmanned aerial vehicle 100 and control, based on the three-dimensional spatial data, the flight of the unmanned aerial vehicle 100.

The UAV control unit 110 acquires date and time information indicating a current date and time. The UAV control unit 110 may acquire date and time information indicating the current date and time from the GPS receiver 240. The UAV control unit 110 may acquire date and time information indicating the current date and time from a timer (not shown) mounted on the unmanned aerial vehicle 100.

The UAV control unit 110 acquires position information indicating a position of the unmanned aerial vehicle 100. The UAV control unit 110 may acquire position information indicating a latitude, a longitude and an altitude where the unmanned aerial vehicle 100 is located from the GPS receiver 240. The UAV control unit 110 may acquire latitude and longitude information indicating the latitude and the longitude where the unmanned aerial vehicle 100 is located from the GPS receiver 240, and altitude information indicating the altitude where the unmanned aerial vehicle 100 is located from the pressure altimeter 270 or the ultrasonic altimeter 280 respectively, as the position information.

The UAV control unit 110 acquires orientation information indicating an orientation of the unmanned aerial vehicle 100 from the magnetic compass 260. An orientation corresponding to an orientation of, for example, a nose of the unmanned aerial vehicle 100 is indicated in the orientation information.

The UAV control unit 110 may acquire position information indicating a position where the unmanned aerial vehicle 100 should be located when the imaging device 220 photographs the imaging range to be captured. The UAV control unit 110 may acquire position information indicating a position where the unmanned aerial vehicle 100 should be located from the memory 160. The UAV control unit 110 may acquire position information indicating a position where the unmanned aerial vehicle 100 should be located from other devices such as the transmitter 50 via the communication interface 150. The UAV control unit 110 may specify a position where the unmanned aerial vehicle 100 can be located and acquire the position as position information indicating a position where the unmanned aerial vehicle 100 should be located, so as to capture the imaging range to be captured with reference to a three-dimensional map database.

The UAV control unit 110 acquires imaging information indicating imaging ranges of the imaging device 220 and the imaging device 230, respectively. The UAV control unit 110 acquires an angle of view information indicating angles of view of the imaging device 220 and the imaging device 230 from the imaging device 220 and the imaging device 230, as parameters for specifying the imaging ranges. The UAV control unit 110 acquires information indicating imaging directions of the imaging device 220 and the imaging device 230 as parameters for specifying the imaging ranges. The UAV control unit 110 acquires posture information indicating a state of posture of the imaging device 220 from the gimbal 200 as information indicating the imaging direction of the imaging device 220, for example. The UAV control unit 110 acquires information indicating an orientation of the unmanned aerial vehicle 100. The information indicating the state of the posture of the imaging device 220 indicates a rotation angle from a reference rotation angle of a pitch axis and a yaw axis of the gimbal 200. The UAV control unit 110 acquires the position information indicating the position where the unmanned aerial vehicle 100 is located as a parameter for specifying the imaging range. The UAV control unit 110 may acquire imaging information by defining, based on the angles of view and the imaging directions of the imaging device 220 and the imaging device 230, and the position of the unmanned aerial vehicle 100, an imaging range indicating a geographical range captured by the imaging device 220 and by generating imaging information indicating the imaging range.

The UAV control unit 110 may acquire imaging information indicating an imaging range that the imaging device 220 should photograph. The UAV control unit 110 may acquire, from the memory 160, imaging information indicating an imaging range that the imaging device 220 should photograph. The UAV control unit 110 may acquire, from other devices such as the transmitter 50 via the communication interface 150, imaging information indicating an imaging range that the imaging device 220 should photograph.

The UAV control unit 110 acquires stereoscopic information indicating a stereoscopic shape of an object existing around the unmanned aerial vehicle 100. The object is, for example, a part of a landscape of a building, a road, a car, a tree, or the like. The stereoscopic information is, for example, three-dimensional spatial data. The UAV control unit 110 may acquire stereoscopic information by generating stereoscopic information indicating a stereoscopic shape of an object existing around the unmanned aerial vehicle 100 from each of the images obtained from the multiple imaging devices 230. The UAV control unit 110 may acquire stereoscopic information indicating a stereoscopic shape of an object existing around the unmanned aerial vehicle 100 with reference to a three-dimensional map database stored in the memory 160. The UAV control unit 110 may acquire stereoscopic information indicating a stereoscopic shape of an object existing around the unmanned aerial vehicle 100 with reference to a three-dimensional map database managed by a server on the network.

The UAV control unit 110 acquires data captured by the imaging device 220 and the imaging device 230.

The UAV control unit 110 controls the gimbal 200, the rotary wing mechanism 210, the imaging device 220, and the imaging device 230. The UAV control unit 110 controls the imaging range of the imaging device 220 by changing the imaging direction and the angle of view of the imaging device 220. The UAV control unit 110 controls, by controlling a rotation mechanism of the gimbal 200, the imaging range of the imaging device 220 supported by the gimbal 200.

In this specification, the imaging range refers to a geographical range captured by the imaging device 220 or the imaging device 230. The imaging range is defined by the latitude, the longitude, and the altitude. The imaging range may be a range in three-dimensional spatial data defined by the latitude, the longitude, and the altitude. The imaging range is specified based on the angle of view and the imaging direction of the imaging device 220 or the imaging device 230, and the position where the unmanned aerial vehicle 100 is located. The imaging direction of the imaging device 220 or the imaging device 230 is defined from the orientation and depression angle of the front where photographing lenses of the imaging device 220 and the imaging device 230 are provided. The imaging direction of the imaging device 220 is a direction specified based on the orientation of the nose of the unmanned aerial vehicle 100 and the state of posture of the imaging device 220 with respect to the gimbal 200. The imaging direction of the imaging device 230 is a direction specified based on the orientation of the nose of the unmanned aerial vehicle 100 and a position where the imaging device 230 is located.

The UAV control unit 110 controls the flight of the unmanned aerial vehicle 100 by controlling the rotary wing mechanism 210. That is, the UAV control unit 110 controls, by controlling the rotary wing mechanism 210, the position of the unmanned aerial vehicle 100 including the latitude, the longitude and the altitude. The UAV control unit 110 may control, by controlling the flight of the unmanned aerial vehicle 100, the imaging range of the imaging device 220 and the imaging device 230. The UAV control unit 110 may control, by controlling the zoom lens of the imaging device 220, the angle of view of the imaging device 220. The UAV control unit 110 may control, by using the digital zoom function of the imaging device 220, the angle of view of the imaging device 220 through digital zoom.

When the imaging device 220 is fixed to the unmanned aerial vehicle 100 and the imaging device 220 cannot be moved, the UAV control unit 110 can cause the imaging device 220 to capture a desired imaging range under a desired environment by moving the unmanned aerial vehicle 100 to a specific position at a specific date and time. Alternatively, even when the imaging device 220 does not have the zoom function and cannot change the angle of view of the imaging device 220, the UAV control unit 110 can cause the imaging device 220 to capture a desired imaging range under a desired environment by moving the unmanned aerial vehicle 100 to a specific position at a specific date and time.

The communication interface 150 communicates with the transmitter 50 (see FIG. 10). The communication interface 150 receives various commands from the remote transmitter 50 to the UAV control unit 110.

The memory 160 stores programs or the like which are necessary for the UAV control unit 110 to control the gimbal 200, the rotary wing mechanism 210, the imaging device 220, the imaging device 230, the GPS receiver 240, the inertial measurement unit 250, the magnetic compass 260, and the pressure altimeter 270. The memory 160 may be a computer-readable recording medium, and may include at least one of a flash memory such as a static random access memory (SRAM), a dynamic random access memory (DRAM), an erasable programmable read only memory (EPROM), an electrically erasable programmable read-only memory (EEPROM), and a USB memory. The memory 160 may be provided in the UAV main body 102. The memory 160 may be detachably provided from the UAV main body 102.

The battery 170 functions as a drive source for each unit of the unmanned aerial vehicle 100, and supplies necessary power to each unit of the unmanned aerial vehicle 100.

The gimbal 200 supports the imaging device 220 rotatably around at least one axis. The gimbal 200 may rotatably support the imaging device 220 around the yaw axis, the pitch axis, and the roll axis. The gimbal 200 causes the imaging device 220 to rotate around at least one of the yaw axis, the pitch axis and the roll axis, and thereby the imaging direction of the imaging device 220 may be changed.

The rotary wing mechanism 210 includes multiple rotary wings and multiple drive motors for rotating the multiple rotary wings.

The imaging device 220 captures an image of a subject in a desired imaging range and generates data of the captured image. The image data acquired by the photographing of the imaging device 220 is stored in a memory of the imaging device 220 or the memory 160.

The imaging device 230 photographs the surroundings of the unmanned aerial vehicle 100 and generates data of the captured image. The image data of the imaging device 230 is stored in the memory 160.

The GPS receiver 240 receives multiple signals indicating the time and position (coordinate) of each GPS satellite transmitted from a multiple navigation satellites (i.e., GPS satellites). The GPS receiver 240 calculates, based on the received multiple signals. a position of the GPS receiver 240 (i.e., the position of the unmanned aerial vehicle 100). The GPS receiver 240 outputs the position information on the unmanned aerial vehicle 100 to the UAV control unit 110. The calculation of the position information on the GPS receiver 240 may be performed by the UAV control unit 110 instead of the GPS receiver 240. In this case, the information indicating the time and the position of each GPS satellite, which is included in the multiple signals received by the GPS receiver 240 is input to the UAV control unit 110...

The inertial measurement unit 250 detects a posture of the unmanned aerial vehicle 100 and outputs the detection result to the UAV control unit 110. The inertial measurement unit IMU 250 detects accelerations in three axial directions, i.e., front-rear, left-right, and up-down directions, of the unmanned aerial vehicle 100, and angular velocities in three axial directions, i.e., the pitch axis, the roll axis, and the yaw axis, as the posture of the unmanned aerial vehicle 100.

The magnetic compass 260 detects the orientation of the nose of the unmanned aerial vehicle 100, and outputs the detection result to the UAV control unit 110.

The pressure altimeter 270 detects a flight altitude of the unmanned aerial vehicle 100 and outputs the detection result to the UAV control unit 110.

The ultrasonic altimeter 280 emits ultrasonic waves, detects the ultrasonic waves reflected by the ground or an object, and outputs the detection result to the UAV control unit 110. The detection result indicates, for example, the distance (i.e., altitude) from the unmanned aerial vehicle 100 to the ground. The detection result may indicate, for example, the distance from the unmanned aerial vehicle 100 to the object.

The speaker 290 acquires voice data from the UAV control unit 110 and voice-outputs the voice data. The speaker 290 may voice-output the voice data as a warning sound. The number of the speakers 290 is one or more and is arbitrary. The installation position of the speaker 290 on the unmanned aerial vehicle 100 is arbitrary. The warning sound output from the speaker 290 has a sound component oriented in the direction of gravity (i.e., toward the ground). The warning sound can be confirmed by a person on the ground, for example, when the altitude of the unmanned aerial vehicle 100 drops.

Next, a flight route of the unmanned aerial vehicle 100 generated by a mobile platform (e.g., the communication terminal 80, the transmitter 50, or the unmanned aerial vehicle 100) according to the present embodiment will be described with reference to FIGS. 11A to 11C. FIG. 11A is an explanatory diagram of a flight route within a flight range AR1 generated based on a flight direction Op1. FIG. 11B is an explanatory diagram of a flight route within the flight range AR1 generated based on a flight direction Op2. FIG. 11C is an explanatory diagram of a flight route within the flight range AR1 generated based on a flight direction Op3.

In FIGS. 11A to 11C, the flight range AR1 as the area where the unmanned aerial vehicle 100 flies is specified for a flight map MP1 of the unmanned aerial vehicle 100 by the user operation. The difference in FIGS. 11A to 11C is that the optimal flight direction (flight angle) of the unmanned aerial vehicle 100 calculated by the cost optimization unit 814 is different.

FIG. 11A shows a flight route, for example, in the case where an instruction indicating that the flight distance of the unmanned aerial vehicle 100 is the shortest within the flight range AR1 specified by the user is specified as the optimization item. For example, the flight direction Op1 is calculated as an optimal flight direction of the unmanned aerial vehicle 100. When the route generation unit 815 generates a flight route of the unmanned aerial vehicle 100, the flight direction Op1 indicates the direction of movement when the unmanned air vehicle 100 flies while changing the flight course from the start point to the end point of the flight direction Op1 as a whole.

More specifically, the flight route shown in FIG. 11A includes a flight course FL11, a flight course FL12, a flight course FL13, and a flight course FL14.

The flight course FL11 (broken line part) is a first flight route where the unmanned aerial vehicle 100 starts flight from a flight start point St1. The unmanned aerial vehicle 100 performs aerial photography during the flight along the flight course FL11. The unmanned aerial vehicle 100 does not perform aerial photography between an end point of the flight course FL11 and a start point of the flight course FL12 (solid line part).

The flight course FL12 (broken line part) is a second flight route where the unmanned aerial vehicle 100 starts flight from the start point of the flight course FL12. The unmanned aerial vehicle 100 performs aerial photography during the flight along the flight course FL12. On the other hand, the unmanned aerial vehicle 100 does not perform aerial photography between an end point of the flight course FL12 and a start point of the flight course FL13 (solid line part).

The flight course FL13 (broken line part) is a third flight route where the unmanned aerial vehicle 100 starts flight from the start point of the flight course FL13. The unmanned aerial vehicle 100 performs aerial photography during the flight along the flight course FL13. On the other hand, the unmanned aerial vehicle 100 does not perform aerial photography between an end point of the flight course FL13 and a start point of the flight course FL14 (solid line part).

The flight course FL 14 (broken line part) is a flight route where the unmanned aerial vehicle 100 flies from the start point of the flight course FL14 to the flight end point En1. The unmanned aerial vehicle 100 performs aerial photography during the flight along the flight course FL14.

FIG. 11B shows a flight route, for example, in the case where an instruction indicating that the flight time of the unmanned aerial vehicle 100 is the shortest within the flight range AR1 specified by the user is specified as the optimization item. For example, the flight direction Op2 is calculated as an optimal flight direction of the unmanned aerial vehicle 100. When the route generation unit 815 generates a flight route of the unmanned aerial vehicle 100, the flight direction Op2 indicates the direction of movement when the unmanned air vehicle 100 flies while changing the flight course from the start point to the end point of the flight direction Op2 as a whole.

More specifically, the flight route shown in FIG. 11B includes a flight course FL21, a flight course FL22, a flight course FL23, a flight course FL24, a flight course FL25, and a flight course FL26. The description of the flight courses FL22, FL23, FL24, and FL25 is similar to that of the flight courses FL12 and FL13 shown in FIG. 11A, and the detailed description thereof is omitted.

The flight course FL21 (broken line part) is a first flight route where the unmanned aerial vehicle 100 starts flight from a flight start point St2. The unmanned aerial vehicle 100 performs aerial photography during the flight along the flight course FL21. The unmanned aerial vehicle 100 does not perform aerial photography between an end point of the flight course FL21 and a start point of the flight course FL22 (solid line part).

The flight course FL26 (broken line part) is a sixth flight route where the unmanned aerial vehicle 100 starts flight from the start point of the flight course FL26.

The unmanned aerial vehicle 100 performs aerial photography during the flight along the flight course FL26. The unmanned aerial vehicle 100 does not perform aerial photography between an end point of the flight course FL26 and a flight end point En2 (solid line part).

FIG. 11C shows a flight route, for example, in the case where an instruction indicating that the power consumption of the battery 170 at the time of the flight of the unmanned aerial vehicle 100 is the minimum within the flight range specified by the user is specified as the optimization item. For example, the flight direction Op3 is calculated as an optimal flight direction of the unmanned aerial vehicle 100. When the route generation unit 815 generates a flight route of the unmanned aerial vehicle 100, the flight direction Op3 indicates the direction of movement when the unmanned air vehicle 100 flies while changing the flight course from the start point to the end point of the flight direction Op3 as a whole.

More specifically, the flight route shown in FIG. 11C includes a flight course FL31, a flight course FL32, a flight course FL33, a flight course FL34, a flight course FL35, a flight course FL36, a flight course FL37, a flight course FL38, a flight course FL39, a flight course FL40, a flight course FL41, a flight course FL42, and a flight course FL43. The description of the flight courses FL32, FL33, FL34, FL35, FL36, FL37, FL38, FL39, FL40, FL41, and FL42 is similar to that of the flight courses FL12 and FL13 shown in FIG. 11A, and the detailed description thereof is omitted.

The flight course FL31 (broken line part) is a first flight route where the unmanned aerial vehicle 100 starts flight from a flight start point St3. The unmanned aerial vehicle 100 performs aerial photography during the flight along the flight course FL31. The unmanned aerial vehicle 100 does not perform aerial photography between an end point of the flight course FL31 and a start point of the flight course FL32 (solid line part).

The flight course FL43 (broken line part) is a flight route where the unmanned aerial vehicle 100 flies from a start point of the flight course FL43 to a flight end point En3. The unmanned aerial vehicle 100 performs aerial photography during the flight along the flight course FL43.

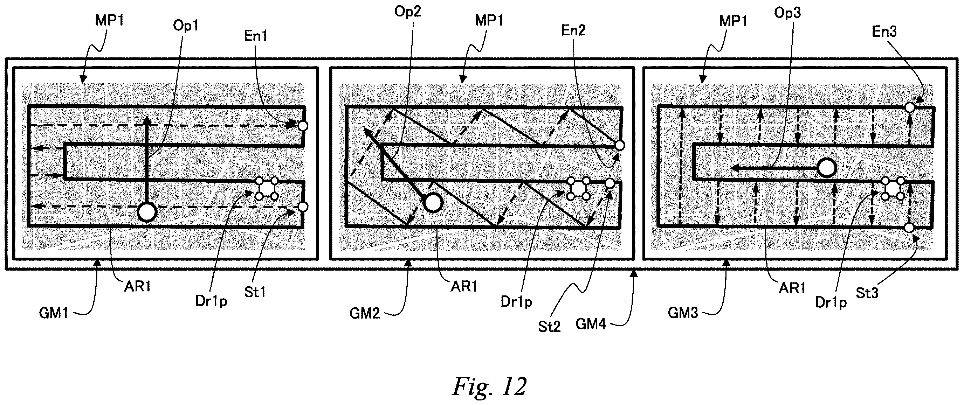

Next, a UI (User Interface) screen of the flight route of the unmanned aerial vehicle 100 displayed on a touch panel display by the mobile platform (e.g., the communication terminal 80, the transmitter 50, or the unmanned aerial vehicle 100) according to the present embodiment will be described with reference to FIG. 12. FIG. 12 is a diagram showing an example of UI screens GM1, GM2, GM3, and GM4 on which the flight routes of FIGS. 11A, 11B, and 11C are respectively displayed.

The UI screen GM 1 displays a flight route, for example, when an instruction indicating that the flight distance of the unmanned aerial vehicle 100 is the shortest within the flight range AR1 specified by the user is specified as the optimization item, corresponding to FIG. 11A.

The UI screen GM2 displays a flight route, for example, in the case where an instruction indicating that the flight time of the unmanned aerial vehicle 100 is the shortest within the flight range AR1 specified by the user is specified as the optimization item, corresponding to FIG. 11B.

The UI screen GM3 displays a flight route, for example, when an instruction indicating that power consumption of the battery 170 at the time of the flight of the unmanned aerial vehicle 100 is the minimum within the flight range specified by the user is specified as the optimization item, corresponding to FIG. 11C.

The route displaying control unit 816 may individually display the UI screens GM1, GM2 and GM3 on a touch panel display (e.g., the touch panel display TPD2). Accordingly, the user can confirm the flight route of the unmanned aerial vehicle 100 in detail on one UI screen on which the flight route corresponding to one optimization item is displayed.

In addition, the route displaying control unit 816 may display a UI screen GM4 on which two or all three of the UI screens GM1, GM2 and GM3 are arranged in a touch panel display (e.g., the touch panel display TPD2). Accordingly, the user can easily confirm details such as the difference between the flight routes by comparing multiple UI screens on which the flight routes corresponding to multiple optimization items are displayed.

The route displaying control unit 816 displays the flight directions Op1, Op2 and Op3 calculated by the cost optimization unit 814 on the UI screens GM1, GM2 and GM3, respectively. Accordingly, the mobile platform (e.g., the communication terminal 80, the transmitter 50, or the unmanned aerial vehicle 100) according to the present embodiment can cause the user to clearly recognize the optimal flight direction of the unmanned aerial vehicle 100 flying within the flight range AR1 specified by the user for each optimization item specified by the user.

The route displaying control unit 816 displays, for example, flight start points St1, St2 and St3 and flight end points En1, En2 and En3 of the flight route generated by the route generation unit 815 on the UI screens GM1, GM2 and GM3, respectively. Accordingly, the mobile platform (e.g., the communication terminal 80, the transmitter 50, or the unmanned aerial vehicle 100) according to the present embodiment can cause the user to clearly recognize the flight start point and the flight end point of the unmanned aerial vehicle 100 flying within the flight range AR1 specified by the user for each optimization item specified by the user.

In addition, the mobile platform (e.g., the communication terminal 80, the transmitter 50, or the unmanned aerial vehicle 100) according to the present embodiment may instruct the movement of the unmanned aerial vehicle 100 to the flight start point and the flight along the flight route displayed on the UI screen when the flight start points St1, St2 and St3 displayed on the UI screens GM1, GM2 and GM 3 are selected or pressed by the user operation. This instruction is performed by, for example, the processor 81 of the communication terminal 80, the transmitter control unit 61 of the transmitter 50, or the UAV control unit 110 of the unmanned aerial vehicle 100. Accordingly, the user can specifically start the flight of the unmanned aerial vehicle 100 according to the optimal flight route with respect to the unmanned aerial vehicle 100.

Further, the mobile platform (e.g., the communication terminal 80, the transmitter 50, or the unmanned aerial vehicle 100) according to the present embodiment may instruct the movement of the unmanned aerial vehicle 100 to the flight start point, the flight along the flight route displayed on the UI screen, and the aerial photography during the flight along the flight route when the flight start points St1, St2 and St3 displayed on the UI screens GM1, GM2 and GM 3 are selected or pressed by the user operation. This instruction is performed by, for example, the processor 81 of the communication terminal 80, the transmitter control unit 61 of the transmitter 50, or the UAV control unit 110 of the unmanned aerial vehicle 100. Accordingly, the user can specifically start the flight of the unmanned aerial vehicle 100 according to the optimal flight route with respect to the unmanned aerial vehicle 100, and can confirm and enjoy the aerial image captured by the unmanned aerial vehicle 100 in flight on the touch panel display.

In addition, the mobile platform (e.g., the communication terminal 80, the transmitter 50, or the unmanned aerial vehicle 100) according to the present embodiment may display an icon Dr1p of the unmanned aerial vehicle 100 on the UI screens GM1, GM2 and GM3 in the position information when the current position information on the unmanned aerial vehicle 100 is acquired. Accordingly, the user can accurately grasp the presence of the unmanned aerial vehicle 100 on the UI screens GM1, GM2 and GM3, for example, and can easily instruct the flight of the unmanned aerial vehicle 100 along the flight route with respect to the unmanned aerial vehicle 100 when the current position of the unmanned aerial vehicle 100 is close to the flight start points St1, St2 and St3.

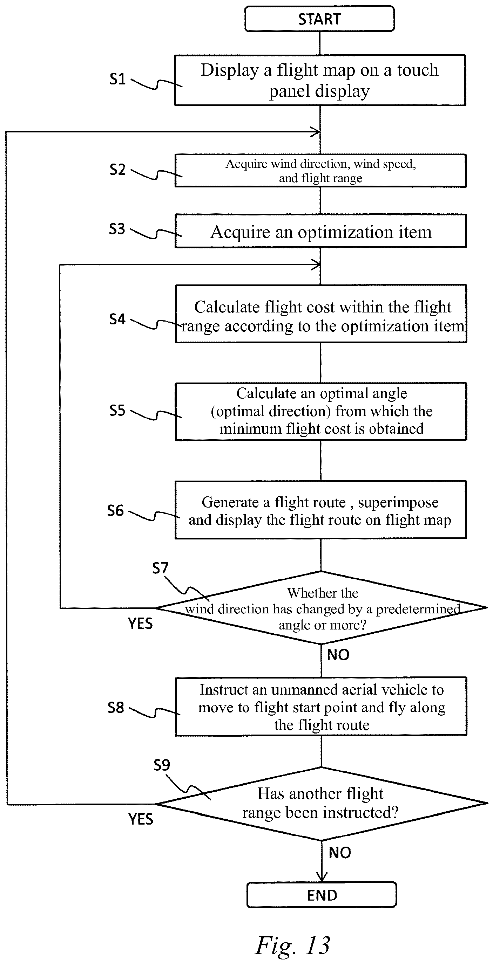

Next, an operation procedure of a flight route display method in the mobile platform (e.g., the communication terminal 80, the transmitter 50, or the unmanned aerial vehicle 100) according to the present embodiment will be described with reference to FIG. 13. FIG. 13 is a flowchart showing in detail an example of the operation procedure of the flight route display method in the mobile platform (e.g., the communication terminal 80) of the present embodiment. In the description of FIG. 13, the communication terminal 80 is descried as an example of the mobile platform according to the present embodiment, and this description can be similarly applied to the transmitter 50 and the unmanned aerial vehicle 100.

In FIG. 13, the communication terminal 80 displays a flight map MP1 on the touch panel display TPD2 according to the user operation (S1). The communication terminal 80 acquires the information on the flight range AR1 of the unmanned aerial vehicle 100 and the environment information (e.g., wind direction and wind speed) of the unmanned aerial vehicle 100, as the information on the flight parameter of the unmanned aerial vehicle 100 (S2). The communication terminal 80 acquires at least one piece of information on the optimization item which is a generation reference item when generating the flight route of the unmanned aerial vehicle 100 (S3).

The communication terminal 80 calculates, based on the information on the flight parameter and the information on the optimization item, a flight cost, which is a flight direction index within the flight range according to the flight direction of the unmanned aerial vehicle 100, by using any one of Equations (1) to (3) corresponding to the information on the optimization item (S4). That is, the communication terminal 80 calculates the flight cost using different cost functions for each optimization item.

The communication terminal 80 calculates an optimal flight direction (flight angle) of the unmanned aerial vehicle 100 flying within the flight range specified by the user, based on the calculation result (i.e., flight cost) for each optimization item (S5). Specifically, the communication terminal 80 searches for and figures out the flight direction (flight angle) giving the minimum value of each flight cost for each flight cost calculated by the Equations (1) to (3), and calculates the optimal flight direction (flight angle) of the unmanned aerial vehicle 100 flying within the flight range.

The communication terminal 80 generates, based on the information on the flight direction (flight angle), a flight route of the unmanned aerial vehicle 100 within the flight range specified by the user (S6). The communication terminal 80 superimposes the data of the flight route of the unmanned air vehicle 100 generated in step S6 on the UI screen (e.g., the UI screen GM1) of the touch panel display (e.g., the touch panel display TPD2) and displays it on the flight map MP1 displayed in step S1 (S6).

As described above, the mobile platform (e.g., the communication terminal 80) according to the present embodiment constantly or periodically acquires the environment information on the unmanned aerial vehicle 100. For example, after step S6, the communication terminal 80 detects For example, after step S6, the communication terminal 80 detects the presence or absence of a change of equal to or greater than a predetermined threshold value (e.g., a predetermined angle) in the wind direction around the unmanned aerial vehicle 100 , in the processor 81 which is an example of the detection unit (S7).. The predetermined angle is a preset value (fixed value) and is registered in the memory 87 of the communication terminal 80, for example. It may be desirable for the predetermined angle to change depending on the weather condition when the unmanned aerial vehicle 100 is flying, and in this case, the predetermined angle may be changed from the fixed value described above by the user operation.

it is detected that the wind direction around the unmanned aerial vehicle 100 changes by a predetermined angle or more (S7, YES), the processing of the communication terminal 80 returns to step S2. That is, in the case where the wind direction around the unmanned aerial vehicle 100 changes by a predetermined angle or more, the communication terminal 80 determines that the flight route generated in step S6 is not appropriate, and calculates the flight cost again based on the reacquired environment information (e.g., the wind direction and the wind speed) (S4). Accordingly, since the mobile platform (e.g., the communication terminal 80) according to the present embodiment recalculates the flight cost when the change in the environment information such as the wind direction around the unmanned aerial vehicle 100 is determined to be large, the flight route of the unmanned aerial vehicle 100 can be adaptively generated according to the environmental change such as the wind direction and then displayed, and the accuracy of the flight route of the unmanned aerial vehicle 100 can be improved.

In addition, when it is detected that the wind direction around the unmanned aerial vehicle 100 dose not change by a predetermined angle or more (S7, NO), the communication terminal 80 selects the flight start point (e.g., the flight start point St1) displayed on the UI screen (e.g., the UI screen GM1) displayed in step S6 based on the user operation, so as to instruct the unmanned aerial vehicle 100 to move to the flight start point and fly along the flight route displayed on the UI screen (S8). Accordingly, the unmanned aerial vehicle 100 can start the flight along the optimal flight route generated by the communication terminal 80.

After step S8, when another flight range is newly instructed on the flight map MP 1 displayed on the touch panel display TPD2 by the user operation on the communication terminal 80 (S9, YES), the processing of the communication terminal 80 returns to step S2. On the other hand, when no another flight range is newly instructed (S9, NO), the processing of the communication terminal 80 shown in FIG. 13 ends.

As described above, in the flight system 10 according to the present embodiment, the mobile platform (e.g., the communication terminal 80) acquires the flight range of the unmanned aerial vehicle 100 and the environment information (e.g., the wind direction and the wind speed) of the unmanned aerial vehicle 100, and calculates, based on the flight cost within the flight range corresponding to the flight direction of the unmanned aerial vehicle 100, the flight direction within the flight range. The mobile platform (e.g., the communication terminal 80) generates, based on the flight direction within the flight range and displays the flight route on the touch panel display (e.g., the touch panel display TPD2, a flight route within the flight range of the unmanned aerial vehicle 100). The unmanned aerial vehicle 100 starts the flight along the flight route according to the instruction based on the user operation on the flight route displayed on the touch panel display.

Accordingly, when a flight range is specified by the user, the flight system 10 according to the present embodiment can generate a flight direction of the unmanned aerial vehicle 100 which is optimal (e.g., having the lowest flight cost) in view of the surrounding environment information on the unmanned aerial vehicle 100 and can visually display the flight direction. Therefore, the flight system 10 does not need to input the environment information around the unmanned aerial vehicle 100 every time, and a reduction in convenience can be suppressed at the time of the user operation.

In addition, the mobile platform (e.g., the communication terminal 80) according to the present embodiment acquires at least one optimization item which is a generation reference item of the flight route of the unmanned aerial vehicle 100, and calculates, based on at least one optimization item and the flight cost according to the flight direction of the unmanned aerial vehicle 100, an optimal flight direction of the unmanned aerial vehicle 100. Accordingly, the mobile platform can generate an appropriate flight route of the unmanned aerial vehicle 100 by incorporating the viewpoint that the user should take prioritized, especially when generating the flight route of the unmanned aerial vehicle 100.

(Modified Example of the Present Embodiment)

Next, in a modified example of the present embodiment (hereinafter, abbreviated as "modified example"), an example of a flight system in a case where a flight range specified by the user operation can be divided into multiple partial flight ranges will be described.

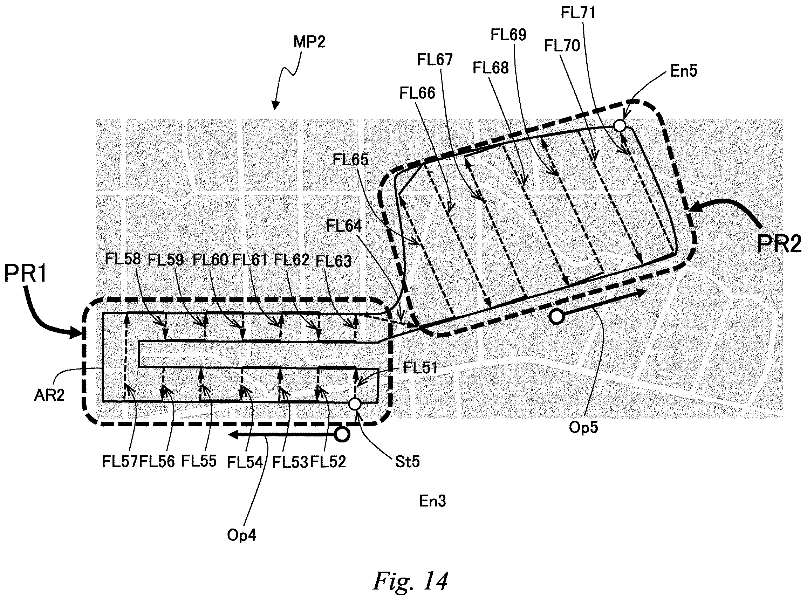

First, a flight route of the unmanned aerial vehicle 100 generated by the mobile platform (e.g., the communication terminal 80, the transmitter 50, or the unmanned aerial vehicle 100) according to the modified example will be described with reference to FIG. 14. FIG. 14 is a explanatory diagram of a flight route in a partial flight range PR1 generated based on a flight direction Op4 and a flight route in a partial flight range PR2 generated based on a flight direction Op5 within multiple partial flight ranges PR1 and PR2 constituting the flight range AR2.

In FIG. 14, the flight range AR2 as an area where the unmanned aerial vehicle 100 is flying is specified for a flight map MP2 of the unmanned aerial vehicle 100 by the user operation. The mobile platform (e.g., the communication terminal 80) according to the modified example has the flight range AR2 divided into multiple partial flight ranges PR1 and PR2 in the processor 81 as an example of a division unit. There are three methods to divide the flight range, for example. A first method is to divide the flight range AR2 according to the user operation. A second method is to divide the flight range AR2 into two or more partial flight ranges such that the size (that is, the area) of the flight range AR2 is substantially equal. A third method is to divide the flight route before detection and a remaining flight route not yet flying along when it is detected that the wind direction changes by a predetermined threshold value or more while the unmanned aerial vehicle 100 is flying along the flight route once generated. In the modified example, any one of the division methods described above may be used, but description will be made assuming that division is performed by, for example, the second method.

After the flight range AR2 is divided into the multiple partial flight ranges PR1 and PR2, the mobile platform (e.g., the communication terminal 80) according to the modified example generates an optimal flight route for each of the partial flight ranges PR1 and PR2 and displays the optimal flight route on the UI screen.

The partial flight range PR1 in FIG. 14 shows a flight route, for example, when an instruction indicating that the power consumption of the battery 170 at the time of the flight of the unmanned aerial vehicle 100 is the minimum within the partial flight range PR1 is specified as the optimization item. For example, the flight direction Op4 is calculated as an optimal flight direction of the unmanned aerial vehicle 100. When the route generation unit 815 generates a flight route of the unmanned aerial vehicle 100, the flight direction Op4 indicates the direction of movement when the unmanned aerial vehicle 100 flies while changing a flight course from a start point to an end point of the flight direction Op4 as a whole.

More specifically, the flight route within the partial flight range PR1 shown in FIG. 14 includes a flight course FL51, a flight course FL52, a flight course FL53, a flight course FL54, a flight course FL55, a flight course FL56, a flight course FL57, a flight course FL58, a flight course FL59, a flight course FL60, a flight course FL61, a flight course FL62, and a flight course FL63. The description of the flight courses FL52, FL53, FL54, FL55, FL56, FL57, FL58, FL59, FL60, FL61, and FL62 is similar to that of the flight courses FL32, FL33, FL34, FL35, FL36, FL37, FL38, FL39, FL40, FL41, and FL42 shown in FIG. 11A, and the detailed description thereof is omitted.

The flight course FL51 (broken line part) is the first flight route where the unmanned aerial vehicle 100 starts flight from a flight start point St53 within the partial flight range PR1. The unmanned aerial vehicle 100 performs aerial photography during the flight along the flight course FL51. On the other hand, the unmanned aerial vehicle 100 does not perform aerial photography between an end point of the flight course FL51 and a start point of the flight course FL52 (solid line part).

The flight course FL63 (broken line part) is a flight route where the unmanned aerial vehicle 100 flies from a start point of the flight course FL63 to a start point of a flight course FL64. The unmanned aerial vehicle 100 performs aerial photography during the flight along the flight course FL43.

In addition, the mobile platform (e.g., the communication terminal 80) according to the present embodiment generates a flight route (specifically, the flight course FL64) between the partial flight range PR1 and the next partial flight range PR2 as a flight route of the unmanned aerial vehicle 100. The flight course FL64 (broken line part) is a flight route where the unmanned aerial vehicle 100 flies from an end point of the partial flight range PR1 to a start point of the next partial flight range PR2. The unmanned aerial vehicle 100 performs aerial photography during the flight along the flight course FL64.

The partial flight range PR2 in FIG. 14 shows a flight route, for example, in the case where an instruction indicating that the power consumption of the battery 170 at the time of the flight of the unmanned aerial vehicle 100 is the minimum within the partial flight range PR2 is specified as the optimization item. For example, the flight direction Op5 is calculated as an optimal flight direction of the unmanned aerial vehicle 100. When the route generation unit 815 generates a flight route of the unmanned aerial vehicle 100, the flight direction Op5 indicates the direction of movement when the unmanned aerial vehicle 100 flies while changing a flight course from a start point to an end point of the flight direction Op5 as a whole.

More specifically, the flight route within a partial flight range PR5 shown in FIG. 14 includes a flight course FL65, a flight course FL66, a flight course FL67, a flight course FL68, a flight course FL69, a flight course FL70, and a flight course FL71. The description of the flight courses FL66, FL67, FL68, FL69, and FL70 is similar to that of the flight courses FL22, FL23, FL24, and FL25 shown in FIG. 11B, and the detailed description thereof is omitted.

The flight course FL65 (broken line part) is a first flight route where the unmanned aerial vehicle 100 starts flight from an end point of the flight course FL64 within the partial flight range PR2. The unmanned aerial vehicle 100 performs aerial photography during the flight along the flight course FL65. On the other hand, the unmanned aerial vehicle 100 does not perform aerial photography between an end point of the flight course FL65 and a start point of the flight course FL66 (solid line part).

The flight course FL71 (broken line part) is a flight route where the unmanned aerial vehicle 100 flies from a start point of the flight course FL71 to a flight end point En5 of the partial flight range PR2. The unmanned aerial vehicle 100 performs aerial photography during the flight along the flight course FL71.

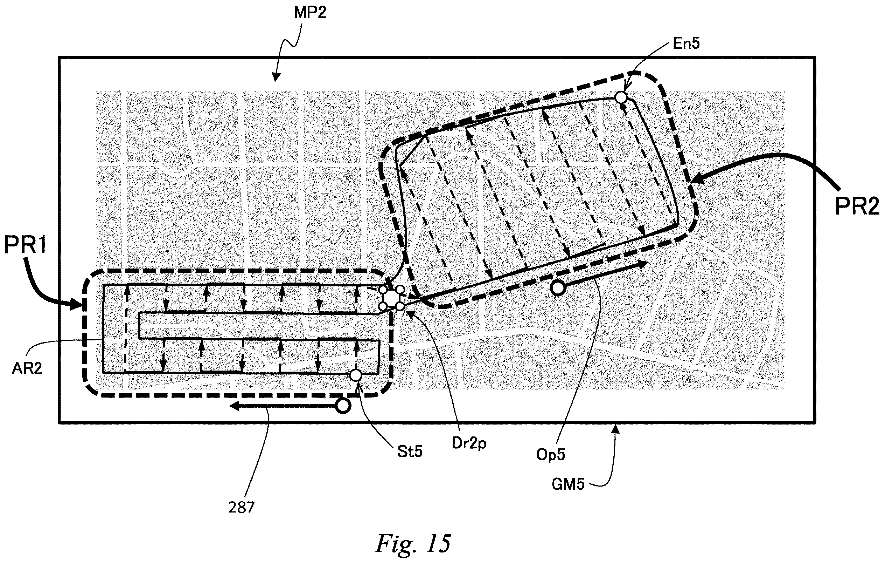

Next, a UI screen of the flight route of the unmanned aerial vehicle 100 displayed on a touch panel display by the mobile platform (e.g., the communication terminal 80, the transmitter 50, or the unmanned aerial vehicle 100) according to the modified example will be described with reference to FIG. 15. FIG. 15 is a diagram showing an example of the UI screen on which the respective flight route in the partial flight ranges PR1 and PR2 in FIG. 14 are displayed.

A UI screen GM5 displays a flight route (specifically, a flight route within the partial flight range PR1 and a flight route within the partial flight range PR2), for example, in the case where an instruction indicating that power consumption of the battery 170 at the time of the flight of the unmanned aerial vehicle 100 is the minimum within the flight range AR2 as the optimization item, corresponding to FIG. 14.

The route displaying control unit 816 may display the UI screen GM5 on the touch panel display (e.g., the touch panel display TPD2). Accordingly, the user can confirm the flight route of the unmanned aerial vehicle 100 in detail on the UI screen on which the flight route corresponding to the optimization item is displayed even when, for example, a large flight range AR2 is specified by the user operation.

The route displaying control unit 816 displays the flight directions Op4 and Op5 calculated by the cost optimization unit 814, for example, on the UI screen GM5 corresponding to the partial flight ranges PR1 and PR2. Accordingly, the mobile platform (e.g., the communication terminal 80, the transmitter 50, or the unmanned aerial vehicle 100) according to the modified example can cause the user to clearly recognize the optimal flight direction of the unmanned aerial vehicle 100 flying within the partial flight ranges PR1 and PR2 constituting the flight range AR2 specified by the user.

The route displaying control unit 816 displays, for example, the flight start point St5 and the flight end point En5 of the flight route generated by the route generation unit 815 on the UI screen GM5, respectively. Accordingly, the mobile platform (e.g., the communication terminal 80, the transmitter 50, or the unmanned aerial vehicle 100) according to the modified example can cause the user to clearly recognize the flight start point and the flight end point of the unmanned aerial vehicle 100 flying within the flight range AR2 specified by the user.

In addition, the mobile platform (e.g., the communication terminal 80, the transmitter 50, or the unmanned aerial vehicle 100) according to the modified example may display an icon Dr2p of the unmanned aerial vehicle 100 on the UI screen GM5 in the position information when the current position information on the unmanned aerial vehicle 100 is acquired. Accordingly, the user can accurately grasp the presence of the unmanned aerial vehicle 100 on the UI screen GM5, for example, and further, can easily instruct the flight of the unmanned aerial vehicle 100 along the flight route with respect to the unmanned aerial vehicle 100 when the current position of the unmanned aerial vehicle 100 is close to the flight start point St5.

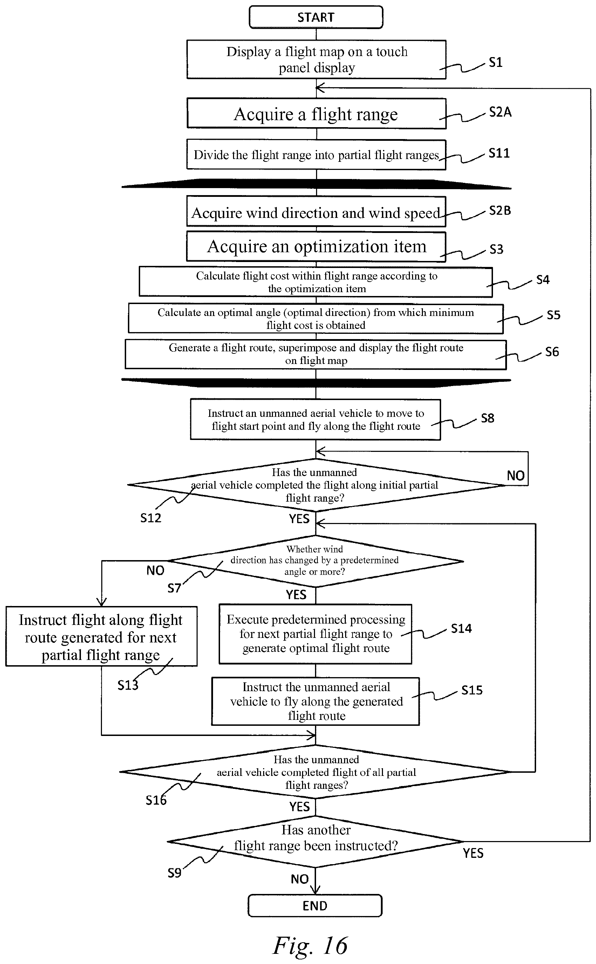

Next, an operation procedure of the flight route display method in the mobile platform (e.g., the communication terminal 80, the transmitter 50, or the unmanned aerial vehicle 100) according to the modified example will be described with reference to FIG. 16. FIG. 16 is a flowchart showing in detail an example of the operation procedure of the mobile platform (e.g., a communication terminal) according to the modified example. In the description of FIG. 16, the same step number is given to the same processing as the processing of FIG. 13, and the description is simplified or omitted.

In FIG. 16, after step S1, the communication terminal 80 acquires information on the flight range AR2 of the unmanned aerial vehicle 100 as the information on the flight parameter of the unmanned aerial vehicle 100 (S2A). The communication terminal 80 divides, based on the size of the flight range AR2 acquired in step S2A, for example, the multiple partial flight ranges PR1 and PR2 (S11).

The communication terminal 80 executes the processing of step S2B, step S3, step S4, step S5, and step S6 for each of the partial flight ranges PR1 and PR2 divided in step S11. In step S2B, the communication terminal 80 acquires the environment information (e.g., wind direction and wind speed) at, for example, representative points of the partial flight ranges PR1 and PR2 (e.g., central points of the partial flight ranges PR1 and PR2) as the information on the flight parameter of the unmanned aerial vehicle 100 (S2B).

After step S6, the communication terminal 80 selects the flight start point St5 displayed on the UI screen displayed in step S6 based on the user operation, so as to instruct the unmanned aerial vehicle 100 to move to the flight start point and fly along the flight route displayed on the UI screen GM5 (S8). Accordingly, the unmanned aerial vehicle 100 can start the flight along the optimal flight route generated by the communication terminal 80.

Since the communication terminal 80 can constantly or periodically receive and acquire the position information on the unmanned aerial vehicle 100 transmitted from the unmanned aerial vehicle 100, the position information on the unmanned aerial vehicle 100 can be grasped. The communication terminal 80 determines whether the unmanned aerial vehicle 100 has completed the flight along a first partial flight range (e.g., the partial flight range PR1) (S12). When it is determined that the unmanned aerial vehicle 100 has not completed the flight along the initial partial flight range (e.g., the partial flight range PR1) (S12, NO), the processing of the communication terminal 80 is in a standby state until it is determined that the unmanned aerial vehicle 100 completes the flight along the first partial flight range (e.g., the partial flight range PR1).

When it is determined that the unmanned aerial vehicle 100 has completed the flight along the initial partial flight range (e.g., the partial flight range PR1) (S12, YES), the communication terminal 80 detects the presence or absence of a change equal to or greater than a predetermined threshold value (e.g., s predetermined angle) in the wind direction around the unmanned aerial vehicle 100 (S7).

When it is determined that the wind direction around the unmanned aerial vehicle 100 has not changed by a predetermined angle or more (S7, NO), the communication terminal 80 instructs the unmanned aerial vehicle 100 to fly along the flight route generated for the next partial flight range PR2 (S13). Accordingly, the unmanned aerial vehicle 100 can fly along the flight route generated by the communication terminal 80 and continue the flight smoothly, in a situation where no special wind direction or change in wind speed is observed.

When it is determined that the wind direction around the unmanned aerial vehicle 100 has changed by a predetermined angle or more (S7, YES), the communication terminal 80 re-executes the predetermined processing (specifically, the processing of step S4, step S5, and step S6) for the next partial flight range PR2 to generate the optimal flight route (S14). The communication terminal 80 instructs the unmanned aerial vehicle 100 to move to the flight start point of the flight route generated in step S14 and to fly along the flight route (S15). Accordingly, the unmanned aerial vehicle 100 can start the flight along the optimal flight route generated by the communication terminal 80.

After step S13 or step S 15, the communication terminal 80 determines whether the unmanned aerial vehicle 100 has completed the flight of all the partial flight ranges generated in step S11 (S16). When it is determined that the unmanned aerial vehicle 100 has not complete the flight of all the partial flight ranges (S16, NO), the processing of the communication terminal 80 returns to step S7.

When it is determined that the unmanned aerial vehicle 100 has completed the flight of all the partial flight ranges (S16, YES), the communication terminal 80 determines whether another flight range is newly instructed on the flight map MP2 displayed on the touch panel display TPD2 according to the user operation (S9). When it is determined that another flight range is newly instructed on the flight map MP2 displayed on the touch panel display TPD2 on the communication terminal 80 according to the user operation (S9, YES), the processing of the communication terminal 80 returns to step S2A. When no another flight range is newly instructed (S9, NO), the processing of the communication terminal 80 shown in FIG. 16 ends.

As described above, in the flight system 10 according to the modified example, the mobile platform (e.g., the communication terminal 80) divides the flight range AR2 into the multiple partial flight ranges PR1 and PR2 according to the size of the flight range AR2, and calculates, for each of the partial flight ranges and based on the flight cost within the partial flight range corresponding to the flight direction of the unmanned aerial vehicle 100, an optimal flight direction within the flight range. In addition, the mobile platform (e.g., the communication terminal 80) generates, for each of the partial flight ranges and based on the flight direction within the partial flight range, a flight route within the partial flight range and displays the flight route on the touch panel display (e.g., the touch panel display TPD2).

Accordingly, the mobile platform (e.g., the communication terminal 80) according to the modified example can generate, for each of the partial flight ranges, an appropriate flight route of the unmanned aerial vehicle 100 and displays the appropriate flight route on the UI screen GM5 even when, for example, a large flight range AR2 is specified by the user operation.

In addition, the mobile platform (e.g., the communication terminal 80) according to the modified example detects the presence or absence of a change equal to or greater than a predetermined threshold value in the environment information (e.g., wind direction and wind speed) with in the partial flight range. When the unmanned aerial vehicle 100 detects a change equal to or greater than a predetermined threshold value in the environment information (e.g., wind direction or wind speed) while flying within any one of the partial flight ranges, the mobile platform calculates, based on the flight cost in the next partial flight range according to the environment information and the flight direction of the unmanned aerial vehicle 100, the flight direction. Accordingly, the mobile platform can recalculate the flight route which can suppress the influence of the environmental change as much as possible and contribute to a safe flight of the unmanned aerial vehicle 100 even when, for example, there is a large environmental change such as a case where the wind direction suddenly changes while the unmanned aerial vehicle 100 is flying along the generated flight route.

The unmanned aerial vehicle 100 may constantly or regularly monitor a remaining capacity ratio of the battery 170 built therein and may transmit the monitoring result to the transmitter 50. In the modified example, for example, when the transmitter 50 or the communication terminal 80 detects that the remaining capacity ratio of the battery of the unmanned aerial vehicle 100 falls below a predetermined ratio (predetermined value), the mobile platform (e.g., the communication terminal 80) re-calculates the flight cost using the optimization item which is an instruction indicating that the power consumption of the battery 170 at the time of the flight of the unmanned aerial vehicle 100 is the minimum within the flight range specified by the user, and similarly generate a flight route of the unmanned air vehicle 100. Accordingly, when the battery 170 of the unmanned aerial vehicle 100 drops considerably, the mobile platform can generate a flight route of the unmanned aerial vehicle 100 such that the consumption of the battery 170 is suppressed as much as possible, and instruct the unmanned aerial vehicle 100 to fly along the flight route. Therefore, the mobile platform can efficiently control the safe flight of the unmanned aerial vehicle 100 even when there is an environmental change in the surroundings.

Although the present disclosure has been described with reference to the embodiments, the technical scope of the invention according to the present disclosure is not limited to the scope described in the above embodiments. It is apparent to those skilled in the art that various modifications or improvements can be added to the above embodiments. It is also apparent from the description of claims that embodiments with such modifications or improvements can be included in the technical scope of the present invention.

The order of performing each processing such as an operation, a procedure, a step, and a stage in a device, a system, a program, and a method shown in the claims, the specification, and the drawings may be implemented in any order unless indicated by such as "before" and "prior to", or that the output of the previous processing is not used in the subsequent processing. Operation flows in the claims, the specification, and the drawings are described using "first", "next", and the like for the sake of convenience, but it does not mean that the flows are necessarily to be performed in this order.

**Description of Reference Numerals**

10 Flight system
50 Transmitter
50B Casing
53L Left control rod
53R Right control rod
61 Transmitter control unit
63, 85 Wireless communication unit
64, 87, 160 Memory
65 Transmitter-side USB interface unit
80, 80T, 80S Communication terminal
81 Processor
83 Terminal-side USB interface unit
89, 240 GPS receiver
100 Unmanned aerial vehicle
102 UAV main body
110 UAV control unit
150 Communication interface
170 Battery
200 Gimbal
210 Rotary wing mechanism
220, 230 Imaging device
250 Inertial measurement unit
260 Magnetic compass
270 Pressure altimeter
280 Ultrasonic altimeter
290 Speaker
811 Flight parameter acquisition unit
812 Optimization item acquisition unit
813 Cost calculation unit
814 Cost optimization unit
815 Route generation unit
816 Route displaying control unit
AN1, AN2 Antenna
B1 Power button
B2 RTH button
DP, TPD display
GM1, GM2, GM3, GM4 UI screen
OP1, OPn Operation unit
OPS Operation unit set

**Claims**

1. A flight route display method, comprising the steps of:

   acquiring a flight range of an unmanned aerial vehicle;
   calculating, based on a flight direction index for a flight route of the unmanned aerial vehicle within the flight range, an optimal flight route within the flight range; and
   displaying the optimal flight route within the flight range of the unmanned aerial vehicle.

2. The flight route display method as claimed in claim 1, further comprising
   a step of acquiring at least one generation reference item for the flight route of the unmanned aerial vehicle,
   wherein the step of calculating the flight route comprises
   a step of calculating, based on the at least one generation reference item and the flight direction index for the flight route of the unmanned aerial vehicle, the flight route.

3. The flight route display method as claimed in claim 2, wherein the generation reference item is an instruction indicating that the flight distance of the unmanned aerial vehicle is the shortest within the flight range.

4. The flight route display method as claimed in claim 2, wherein the generation reference item is an instruction indicating that the flight time of the unmanned aerial vehicle is the shortest within the flight range.

5. The flight route display method according to claim 2, wherein the generation reference item is an instruction indicating that the power consumption of a battery when the unmanned aerial vehicle flies is the minimum within the flight range.

6. The flight route display method as claimed in claim 2, wherein the step of acquiring the generation reference item comprises
   a step of acquisition based on a selection from among the at least one generation reference item of the flight route displayed on a display unit.

7. The flight route display method according to claim 1 or 2,
   wherein the step of displaying the flight route comprises
   a step of displaying a flight direction within the flight range of the unmanned aerial vehicle.

8. The flight route display method as claimed in claim 1 or 2,
wherein the step of displaying the flight route comprises
a step of displaying both a flight start point and a flight end point within the flight range of the unmanned aerial vehicle.

9. The flight route display method as claimed in claim 8, further comprising:
a step of instructing a movement of the unmanned aerial vehicle to the flight start point and a flight, along the flight route, of the unmanned aerial vehicle according to a selection of the flight start point.

10. The flight route display method as claimed in claim 9, wherein the step of instructing the flight comprises a step of instructing the unmanned aerial vehicle to take a photograph during flight along the flight route.

11. The flight route display method as claimed in claim 1 or 2,
wherein the step of calculating the flight route further comprises
a step of calculating a flight direction, which gives the minimum value of the flight direction index, to be a flight direction within the flight range.

12. The flight route display method as claimed in claim 1, further comprising the steps of:

acquiring environment information about the unmanned aerial vehicle; and
detecting the presence or absence of a change equal to or greater than a predetermined threshold value in the environment information.
wherein the step of calculating the flight route comprises
a step of calculating, based on the flight direction index when a change equal to or greater than the predetermined threshold value in the environment information is detected, a flight route within the flight range.

13. The flight route display method as claimed in claim 1, further comprising:

a step of dividing the flight range into multiple partial flight ranges according to the size of the flight range,
wherein the step of calculating the flight route comprises
a step of calculating, for each of the partial flight ranges and based on a flight direction index within a partial flight range according to a flight direction of the unmanned aerial vehicle, a flight route within the flight range, and
wherein the step of displaying the flight route comprises

a step of displaying, for each of the partial flight ranges, the flight route within the partial flight range.

14. The flight route display method as claimed in claim 13, further comprising the steps of:

acquiring environment information about the unmanned aerial vehicle; and
detecting the presence or absence of a change equal to or greater than a predetermined threshold value in the environment information,
wherein the step of calculating the flight route comprises
a step of calculating, based on the environment information and the flight direction index within a partial flight range next to any one of the partial flight ranges according to the flight direction of the unmanned aerial vehicle, a flight route within the next partial flight range when a change equal to or greater than the predetermined threshold value in the environment information is detected while the unmanned aerial vehicle flies within any one of the partial flight ranges.

15. The flight route display method as claimed in claim 12 or 14,
wherein the environment information about the unmanned aerial vehicle is at least one of the wind direction and the wind speed around the unmanned aerial vehicle.

16. A mobile platform, comprising:

a first acquisition unit configured to acquire a flight range of an unmanned aerial vehicle;
a calculation unit configured to calculate, based on a flight direction index for the flight route of the unmanned aerial vehicle within the flight range, an optimal flight route within the flight range; and
a control unit configured to display, on a display unit, the optimal flight route within the flight range of the unmanned aerial vehicle.

17. The mobile platform as claimed in claim 16, further comprising:

a second acquisition unit configured to acquire at least one generation reference item of the flight route of the unmanned aerial vehicle,
wherein the calculation unit
calculates, based on the at least one generation reference item and the flight direction index for the flight route of the unmanned aerial vehicle, the flight route.

18. The mobile platform as claimed in claim 17,

wherein the generation reference item is an instruction indicating that the flight distance of the unmanned aerial vehicle is the shortest within the flight range.

19. The mobile platform as claimed in claim 17, wherein the generation reference item is an instruction indicating that the flight time of the unmanned aerial vehicle is the shortest within the flight range.

20. The mobile platform as claimed in claim 17, wherein the generation reference item is an instruction indicating that the power consumption of a battery when the unmanned aerial vehicle flies is the minimum within the flight range.

21. The mobile platform as claimed in claim 17, wherein the second acquisition unit carries out acquisition in response to a selection from among the at least one generation reference item of the flight route displayed on the display unit.

22. The mobile platform as claimed in claim 16 or 17, wherein the control unit displays, on the display unit, a flight direction within the flight range of the unmanned aerial vehicle.

23. The mobile platform as claimed in claim 16 or 17, wherein the control unit displays, on the display unit, both a flight start point and a flight end point within the flight range of the unmanned aerial vehicle.

24. The mobile platform as claimed in claim 23, wherein the control unit instructs, in response to the selection of the flight start point displayed on the display unit, the movement of the unmanned aerial vehicle to the flight start point and the flight, according to the flight route, of the unmanned aerial vehicle.

25. The mobile platform as claimed in claim 24, wherein the control unit instructs the unmanned aerial vehicle to take a photograph during flight according to the flight route.

26. The mobile platform as claimed in claim 16 or 17, wherein the calculation unit calculates a flight direction, which gives a minimum value of the flight direction index, as a flight direction within the flight range.

27. The mobile platform as claimed in to claim 16, wherein the first acquisition unit acquires environment information about the unmanned aerial vehicle, a detection unit configured to detect the presence or absence of a change equal to or greater than a predetermined threshold value in the environment information is further included, and wherein the calculation unit calculates, based on the flight direction index when a change equal to or greater than the predetermined threshold value in the environment information is detected, a flight route within the flight range.

28. The mobile platform as claimed in claim 16, further comprising:

a division unit configured to divide the flight range into multiple partial flight ranges according to the size of the flight range, wherein the calculation unit calculates, for each of the partial flight ranges and based on a flight direction index within a partial flight range according to the flight direction of the unmanned aerial vehicle, a flight route within the flight range, and wherein the control unit displays, on the display unit and for each of the partial flight ranges, the flight route within the partial flight range.

29. The mobile platform as claimed in claim 28, wherein the first acquisition unit acquires environment information about the unmanned aerial vehicle, a detection unit configured to detect the presence or absence of a change in the environment information and equal to or greater than a predetermined threshold value is further included, and wherein the calculation unit calculates, based on the environment information and the flight direction index within a partial flight range next to any one of the partial flight ranges according to the flight direction of the unmanned aerial vehicle, a flight route within a next partial flight range when a change equal to or greater than the predetermined threshold value in the environment information is detected while the unmanned aerial vehicle flies within any one of the partial flight ranges,.

30. The mobile platform as claimed in to claim 16, wherein the environment information about the unmanned aerial vehicle is at least one of the wind direction and the wind speed around the unmanned aerial vehicle.

31. The mobile platform as claimed in any one of claims 16 to 30, wherein the mobile platform is an operation terminal which is connected to the display unit and which remotely controls the unmanned aerial vehicle, or is a communication terminal which is connected to an operation terminal.

**32.** A flight system, in which an unmanned aerial vehicle and a mobile platform are connected such that same can communicate,
wherein the mobile platform
acquires a flight range of the unmanned aerial vehicle,
calculates, based on a flight direction index for the flight route of the unmanned aerial vehicle within the flight range, an optimal flight route within the flight range, and
displays, on a display unit, the optimal flight route within the flight range of the unmanned aerial vehicle, and
wherein the unmanned aerial vehicle
starts to fly along the flight route according to an instruction for the flight route displayed on the display unit.

**33.** A computer-readable recording medium recording program for causing a mobile platform which is a computer to execute the steps of:

acquiring a flight range of an unmanned aerial vehicle;
calculating, based on a flight direction index for a flight route of the unmanned aerial vehicle within the flight range, an optimal flight route within the flight range; and
displaying the optimal flight route within the flight range of the unmanned aerial vehicle.

**34.** A program for causing a mobile platform which is a computer to execute the steps of:

acquiring a flight range of an unmanned aerial vehicle;
calculating, based on a flight direction index for a flight route of the unmanned aerial vehicle within the flight range, an optimal flight route within the flight range; and
displaying the optimal flight route within the flight range of the unmanned aerial vehicle.

10

100

50

*Fig. 1*

*Fig. 2*

TPD2

UJ2

80S

50

TML

HLD

TMR

51

53L

AN2

B1

53R

B2

L1

L2

50B

UP

REAR

LEFT

RIGHT

FRONT

DOWN

*Fig. 3*

50

53L

AN1

AN2

B1

TPD1

53R

L1

B2

L2

50B

UP    REAR

LEFT

RIGHT

FRONT DOWN

*Fig. 4*

*Fig. 5*

· WIND DIRECTION      · SHORTEST FLIGHT DISTANCE
· WIND SPEED           · SHORTEST FLIGHT TIME
· FLIGHT RANGE       · MINIMUM ENERGY CONSUMPTION

61,81,110

FLIGHT PARAMETER
ACQUISITION UNIT
811

OPTIMIZATION ITEM
ACQUISITION UNIT
812

813

FLIGHT
PARAMETER

COST CALCULATION
UNIT

COST OPTIMIZATION
UNIT

OPTIMIZATION
ITEM

814

OPTIMAL ANGLE
(OPTIMAL DIRECTION)

ROUTE
GENERATION UNIT
815

FLIGHT ROUTE

ROUTE DISPLAYING
CONTROL UNIT
816

TO TOUCH PANEL DISPLAY

*Fig. 6*

FLIGHT COST

COST OPTIMIZATION
RESULT

CV1

Point A
(min)

OPTIMAL FLIGHT DIRECTION
(OPTIMAL FLIGHT ANGLE)

FLIGHT DIRECTION
(FLIGHT ANGLE)

*Fig. 7*

*Fig. 8*

102

STV0

230    230

100

200

220

YAW AXIS (z)

ROLL AXIS (x)

PITCH AXIS (y)

EP 3 564 621 A1

*Fig. 9*

*Fig. 10*

*Fig. 11A*

*Fig. 11B*

FL38 FL39 FL40 FL41 FL42 FL43

En3

Op3

AR1

FL31

St3

FL37 FL36 FL35 FL34 FL33 FL32

MP1

*Fig. 11C*

*Fig. 12*

```
                        ┌─────────────────┐
                        │      START      │
                        └─────────────────┘
                                 │
                                 ▼
                   ┌───────────────────────────────┐
        S1 ────────│  Display a flight map on a     │
                   │      touch panel display       │
                   └───────────────────────────────┘
                                 │
      ┌─────────────────────────►│
      │                          ▼
      │            ┌───────────────────────────────┐
      │  S2 ───────│ Acquire wind direction, wind   │
      │            │   speed, and flight range      │
      │            └───────────────────────────────┘
      │                          │
      │            ┌───────────────────────────────┐
      │  S3 ───────│   Acquire an optimization item │
      │            └───────────────────────────────┘
      │                          │
      │  ┌──────────────────────►│
      │  │                       ▼
      │  │         ┌───────────────────────────────┐
      │  │ S4 ─────│ Calculate flight cost within   │
      │  │         │ the flight range according to  │
      │  │         │      the optimization item     │
      │  │         └───────────────────────────────┘
      │  │                       │
      │  │         ┌───────────────────────────────┐
      │  │ S5 ─────│ Calculate an optimal angle     │
      │  │         │ (optimal direction) from which │
      │  │         │ the minimum flight cost is     │
      │  │         │           obtained             │
      │  │         └───────────────────────────────┘
      │  │                       │
      │  │         ┌───────────────────────────────┐
      │  │ S6 ─────│ Generate a flight route ,      │
      │  │         │ superimpose and display the    │
      │  │         │   flight route on flight map   │
      │  │         └───────────────────────────────┘
      │  │                       │
      │  │   S7                  ▼
      │  │        ◇───────────────────────────────◇
      │  └────────    Whether the wind direction
      │      YES    has changed by a predetermined
      │            ◇       angle or more?          ◇
      │                       │ NO
      │                       ▼
      │            ┌───────────────────────────────┐
      │  S8 ───────│ Instruct an unmanned aerial    │
      │            │ vehicle to move to flight      │
      │            │ start point and fly along the  │
      │            │           flight route         │
      │            └───────────────────────────────┘
      │                       │
      │      S9               ▼
      │            ◇───────────────────────────────◇
      └────────────    Has another flight range
           YES        ◇     been instructed?       ◇
                              │ NO
                              ▼
                     ┌─────────────────┐
                     │       END       │
                     └─────────────────┘
```

*Fig. 13*

*Fig. 14*

EP 3 564 621 A1

*Fig. 15*

START

Display a flight map on a touch
panel display — S1

Acquire a flight range — S2A

Divide the flight range into partial flight ranges — S11

Acquire wind direction and wind speed — S2B

Acquire an optimization item — S3

Calculate flight cost within flight range according to
the optimization item — S4

Calculate an optimal angle (optimal direction) from which minimum
flight cost is obtained — S5

Generate a flight route, superimpose and display the flight route
on flight map — S6

Instruct an unmanned aerial vehicle to move to
flight start point and fly along the flight route — S8

Has the unmanned
aerial vehicle completed the flight along initial partial
flight range?    NO

S12    YES

Whether wind
direction has changed by a predetermined
angle or more?

NO

S7    YES

Instruct flight along flight
route generated for next
partial flight range

S13

Execute predetermined processing
for next partial flight range to
generate optimal flight route — S14

Instruct the unmanned aerial
vehicle to fly along the generated
flight route — S15

Has the unmanned
aerial vehicle completed flight of all partial
flight ranges?

S16    YES

Has another
flight range been instructed?

S9    YES

NO

END

*Fig. 16*

**INTERNATIONAL SEARCH REPORT**

International application No.

PCT/JP2016/089204

A. CLASSIFICATION OF SUBJECT MATTER

*G01C21/20*(2006.01)i

According to International Patent Classification (IPC) or to both national classification and IPC

B. FIELDS SEARCHED

Minimum documentation searched (classification system followed by classification symbols)
G01C21/20

Documentation searched other than minimum documentation to the extent that such documents are included in the fields searched

| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2014-139538 A (Mitsubishi Heavy Industries, Ltd.), 31 July 2014 (31.07.2014), | 1-6,8-10,13, 16-21,23-25, 28,31-34 |
| A | paragraphs [0042] to [0048] (Family: none) | 7,11-12, 14-15,22, 26-27,29-30 |
| Y | JP 2008-308154 A (Honeywell International Inc.), 25 December 2008 (25.12.2008), | 1-6,8-10,13, 16-21,23-25, 28,31-34 |
| A | paragraphs [0022], [0026] & US 2010/0017114 A1 paragraphs [0031], [0035] & EP 1995560 A2 | 7,11-12, 14-15,22, 26-27,29-30 |

[X] Further documents are listed in the continuation of Box C.    [ ] See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| 17 March 2017 (17.03.17) | 04 April 2017 (04.04.17) |

| Name and mailing address of the ISA/ | Authorized officer |
| Japan Patent Office 3-4-3,Kasumigaseki,Chiyoda-ku, Tokyo 100-8915,Japan | |
| | Telephone No. |

Form PCT/ISA/210 (second sheet) (January 2015)

43

**INTERNATIONAL SEARCH REPORT**

International application No.

PCT/JP2016/089204

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-350152 A  (Mazda Motor Corp.), 04 December 2002 (04.12.2002), paragraph [0057] (Family: none) | 2-6,8-10, 17-21,23-25 |
| Y | Taiji ARAI, Takahiro KOITA, "A Heuristic Method for Dynamic Route Decision in DTNs", IEICE Technical Report MoMuC2012-1, 14 May 2012 (14. 05.2012), vol.112, no.44, pages 1 to 3 | 13,28 |

Form PCT/ISA/210 (continuation of second sheet) (January 2015)

**EP 3 564 621 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010061216 A